# EUROPÄISCHE PATENTSCHRIFT

(11) **EP 2 517 329 B1**
(45) Veröffentlichungstag und Bekanntmachung des Hinweises auf die Patenterteilung: **30.05.2018**
(21) Anmeldenummer: 10782229.8
(22) Anmeldetag: 11.11.2010
(51) Int. Cl.: H02J 13/00, H05B 37/02, H01H 1/00

(54) **FERNSTEUERBARER SCHALTER**
REMOTELY CONTROLLABLE SWITCH
COMMUTATEUR POUVANT ÊTRE TÉLÉCOMMANDÉ

(30) Priorität: 22.12.2009 DE 102009060435
(43) Veröffentlichungstag der Anmeldung: 31.10.2012
(73) Patentinhaber: Innogy SE, 45128 Essen (DE); EQ-3 AG, 26789 Leer (DE)
(72) Erfinder: DANKE, Enno, 81373 München (DE); GROHMANN, Bernd, 26135 Oldenburg (DE)
(74) Vertreter: Cohausz & Florack
(86) Internationale Anmeldenummer: PCT/EP2010/067262
(87) Internationale Veröffentlichungsnummer: WO 2011/085840

(56) Entgegenhaltungen:
- FR-A1- 2 848 376
- US-A1- 2009 103 228

## Beschreibung

Die vorliegende Erfindung betrifft einen fernsteuerbaren Schalter.

Ein fernsteuerbarer Schalter mit einer ersten Anschlussgruppe und einer zweiten Anschlussgruppe, einer fernsteuerbaren Steuereinheit zum Erzeugen eines Schaltsignals und mit einer Schaltanordnung, die mittels des Schaltsignals zwischen einem ersten Schaltzustand und einem zweiten Schaltzustand schaltbar ist aus dem Stand der Technik EP 1 734 636 A2 bekannt. Gemäß der Lehre dieses Standes der Technik umfasst dabei die Steuereinheit ein Kommunikationsmodul, einen Mikrocontroller und ein Schaltelement, das gemäß der Terminologie dieser Druckschrift die Entität darstellt, die auf einen Schalter einwirkt, um einen Stromkreis mit einem Verbraucher zu öffnen oder zu schließen. Mittels einer Gebäudeautomationssteuerung können über Kommunikationsmodul und Mikrocontroller Befehle an das Schaltelement ausgegeben werden, welches daraufhin entsprechend des Befehls auf den Stromkreis einwirkt. Neben der Beeinflussung des Schaltelements mittels der Gebäudeautomationssteuerung kann über ein Bedienelement das Schaltelement veranlasst werden, einen Schaltvorgang herbeizuführen.

Kommunikationsmodul, Mikrocontroller und Schaltelement sind in einer Schaltdose angeordnet. Als Bedienelement dienen dabei Bedienschalter einer bestehenden Elektroinstallation, wobei diese Bedienschalter, wenn die Schaltdose nicht montiert ist, bei Betätigung durch einen Bedien einen Stromkreis schließen oder unterbrechen, der einen Verbraucher mit einem Netzanschluss verbindet.

Es ist das der Lehre der EP 1 734 636 A2 zugrunde liegende Konzept, zu einem anderen als mittels der Gebäudeautomationssteuerung induzierten Unterbrechen oder Schließen des Stromkreises mittels der in der Schaltdose untergebrachten Komponenten festzustellen, ob sich die Schaltzustandskombination der Bedienschalter einer bestehenden Elektroinstallation geändert hat. Ist dies der Fall, wird über das Schaltelement und den von diesem kontrollierten Schalter ein Unterbrechen oder Schließen des Stromkreises herbeigeführt. Da der Eingang des vom Netzanschluss gesehen ersten Bedienschalters mit dem Phasenleiter des Netzanschlusses verbunden ist, und die Ein- und Ausgänge der Bedienschalter so miteinander verschaltet sind, dass ein Schaltvorgang eines der Bedienschalter stets entweder eine Unterbrechung oder ein Schließen des Strompfads vom Eingang des ersten Bedienschalters zum Ausgang des letzten Bedienschalters zur Folge hat, wird jeder Schaltvorgang eines Bedienschalters am Ausgang des letzten Bedienschalters sichtbar, da entweder ein Stromfluss einsetzt oder aussetzt.

Um in eine derartige Installation, die mehrere in Reihe geschaltete Bedienschalter umfasst, eingegliedert werden zu können und so die Steuerbarkeit des Verbrauchers über die Gebäudeautomationssteuerung zu ermöglichen, muss die Schaltdose, wenn in ihr auch der Schalter, auf den das Schaltelement einwirkt untergebracht ist, oder aber zumindest der Schalter selbst derart angeordnet werden, dass unabhängig von der Stellung der übrigen Schalter der Installation sich stets das vom Bediener gewünschte Ergebnis, d.h. ein Unterbrechen oder Schließen des Stromkreises einstellt. Dies erfordert bei den aus der EP 1 734 636 A2 bekannten Installationen, eine Leitung vorzusehen, über die der vom Netzanschluss bereitgestellte Strom unter Umgehung der Bedienschalter über den Schalter, auf den das Schaltelement einwirkt, zum Verbraucher fließen kann. Das Verlegen dieser Leitung stellt einen hohen Montageaufwand dar und kann dementsprechend mit hohen Kosten verbunden sein, was ein Hemmnis für die Umrüstung einer konventionellen Elektroinstallation zur Herstellung ihrer Fernbedienbarkeit darstellt.

Andere bekannte Lösungsansätze basieren darauf, alle konventionellen Schalter einer Installation auszutauschen und dabei einen Schalter durch einen fernsteuerbaren Schalter zu ersetzen und die übrigen Schalter durch solche zu ersetzen, die in der Lage sind, ihren Schaltzustand drahtlos oder über eine zusätzlich zu verlegende Leitung dem fernsteuerbaren Schalter mitzuteilen, damit dieser die aktuellen Schaltzustände aller Schalter kennt und entsprechend auf ein Fernsteuersignal reagieren kann. Hierdurch ergibt sich ein hoher Montage- und Kostenaufwand.

Aus der DE 197 35 500 A1 ist die Kombination einer konventionellen Schaltanlage mit einer ferngesteuerten Schaltvorrichtung für die häusliche Elektroinstallation bekannt. Statt eines konventionellen Ein- und Ausschalters, Tasters, Wechsel- oder Kreuzschalters wird bei dieser Vorrichtung in einer Schaltanlage ein drahtlos betätigbarer Schalter eingesetzt. Hierzu ist dieser Schalter mit einem Empfänger und einem Schaltwerk ausgestattet, so dass dieser Schalter als Empfängerschalter von einem oder mehreren Zusatzschaltern über ein entsprechendes Signal fernsteuerbar ist.

Die DE 298 24 058 U1 zeigt eine Schaltzustandserfassung im Strompfad eines Wechselschalters. Hierzu werden zwei Spannungsquellen unterschiedlicher Phasenlage parallel an einen Wechselschalter angelegt. Hierdurch lassen sich mehrpolige Schalteinrichtungen unproblematisch überprüfen, wobei sich die verwendeten Wechselspannungen durch ihre Frequenz, Amplitude und/oder Phasenlage unterscheiden.

Schließlich zeigt die DE 199 33 686 A1 eine Anordnung zur Detektion von Schaltzuständen von Wechselschaltern, wobei beim Schalter Mittel zur drahtlosen Fernablesung eines Zustands der Schalteinheit vorgesehen sind.

Davon ausgehend ist es eine Aufgabe der vorliegenden Erfindung, das Umrüsten einer Installation zur Herstellung der Fernbedienbarkeit damit verbundener elektrischer Komponenten zu erleichtern.

Diese Aufgabe wird erfindungsgemäß bei einem fernsteuerbaren Schalter der eingangs genannten Art dadurch gelöst, dass die erste Anschlussgruppe zumindest einen Anschluss umfasst, die zweite Anschlussgruppe einen ersten Anschluss umfasst, der im ersten Schaltzustand der Schaltanordnung elektrisch mit dem Anschluss der ersten Anschlussgruppe verbunden ist, und die zweite Anschlussgruppe einen zweiten Anschluss umfasst, der im zweiten Schaltzustand der Schaltanordnung elektrisch mit dem Anschluss der ersten Anschlussgruppe verbunden ist, wobei im Strompfad des Anschlusses der ersten Anschlussgruppe, der Schaltanordnung und der zweiten Anschlussgruppe angeordnete Strommessmittel zum Erzeugen eines den gemessenen Strom repräsentierenden Ausgangssignals vorgesehen sind und die fernsteuerbare Steuereinheit eingerichtet ist, das Schaltsignal basierend auf dem Ausgangssignal der Strommessmittel und einem Fernsteuersignal zu erzeugen, wobei der fernsteuerbaren Steuereinheit Tasterkennungsmittel zur Erkennung der Betätigung externer Tastmittel zugeordnet sind und die fernsteuerbare Steuereinheit eingerichtet ist, ein auf dem Tasterkennungssignal der Tasterkennungsmittel basierendes Schaltsignal zum Schalten der Schaltanordnung zu erzeugen, unddie externen Tastmittel bei Betätigung einen Stromkreis schließen oder einen geschlossenen Stromkreis unterbrechen, wobei die Tasterkennungsmittel in den Stromkreis eingeschleift sind, als Widerstandsmessmittel ausgebildet sind und eingerichtet sind, der fernsteuerbaren Steuereinheit ein den von ihnen gemessenen Widerstand repräsentierendes Tasterkennungssignal zur Verfügung zu stellen. Ausführungsbeispiele des fernsteuerbaren Schalters können in einer bestehenden Elektroinstallation als Ersatz für einen konventionellen, d.h. nicht fernsteuerbaren Schalter, verwendet werden, um so die Fernsteuerung der Installation zu ermöglichen. Dies gilt auch für eine mehrere in Reihe angeordnete Schalter umfassende Installation. Dazu kann ein konventioneller Schalter aus der Installation entfernt und der fernsteuerbare Schalter an seiner Stelle montiert werden. Es kann bei der Montage ausreichen, lediglich Leiter mit den Anschlüssen des fernsteuerbaren Schalters zu verbinden, die zuvor mit dem konventionellen Schalter verbunden waren.
Sind über den fernsteuerbaren Schalter und beispielsweise einem damit in Reihe geschalteten konventionellen Schalter, z.B. in einer Wechselschaltung, Spannungsversorgungsmittel mit einem Verbraucher verbindbar, kann mittels der Strommessmittel erfasst werden, ob in dem jeweils vorliegenden Schaltzustand ein Strom über die Schaltanordnung fließt. Dies ist wiederum ein Indikator dafür, ob im aktuellen Schaltzustand die Spannungsversorgung in einen geschlossenen Stromkreis mit dem fernsteuerbaren Schalter und dem Verbraucher eingebunden ist.
Ohne die Strommessmittel ist es bei einer mehrere Schalter umfassenden Installation wie der vorstehend beschriebenen mit geringem Installationsaufwand nicht möglich, einen gewünschten Schaltzustand per Fernsteuersignal herzustellen. Fordert das Fernsteuersignal zum Beispiel eine Verbindung des Verbrauchers mit den Spannungsversorgungsmitteln, muss die fernsteuerbare Steuereinheit entscheiden können, ob dies eine Schaltzustandsänderung der Schaltanordnung notwendig macht oder nicht, d.h. ob der gewünschte Zustand bereits vorliegt oder noch herzustellen ist. Ohne diese Information ist lediglich ein meist nicht sinnvolles Umschalten von einem unbekannten Zustand in einen anderen dementsprechend auch unbekannten Zustand durchführbar.

Über das Ausgangssignal der Strommessmittel kann die Information, ob bei der vorliegenden Schaltzustandskombination der Schalter der Installation ein Strom fließt, der fernsteuerbaren Steuereinheit des fernsteuerbaren Schalters zugeführt werden. Dies ermöglicht, dass beispielsweise ein Benutzer, der den fernsteuerbaren Schalter fernsteuert, ohne dass er den aktuellen Schaltzustand kennt, über die fernsteuerbare Steuereinheit den gewünschten Schaltzustand herstellen kann. Übermittelt er als Fernsteuersignal den Befehl, dass der Verbraucher mit Spannung zu versorgen ist, an die fernsteuerbare Steuereinheit, kann diese anhand des Ausgangssignals der Strommessmittel feststellen, ob im aktuellen Schaltzustand Strom über die Schaltanordnung fließt. Ist dies der Fall, gibt sie, da sie eingerichtet ist, basierend auf dem Fernsteuersignal und dem Ausgangssignal ein Schaltsignal zu erzeugen, und da das Ausgangssignal der Strommessmittel anzeigt, dass der gewünschte Zustand bereits vorliegt, kein Schaltsignal an die Schaltanordnung aus. Diese verharrt somit in ihrem aktuellen Schaltzustand. Im umgekehrten Fall, d.h. wenn der Verbraucher nicht mit Spannung versorgt werden soll, die Strommessmittel aber einen Stromfluss feststellen, generiert die fernsteuerbare Steuereinheit ein Schaltsignal, das einen Schaltzustandswechsel der Schaltanordnung hervorruft, um so den Stromkreis und damit die Spannungsversorgung der Glühlampe zu unterbrechen.

Durch die Möglichkeit bei einem fernsteuerbaren Schalter gemäß der vorliegenden Erfindung sowohl mittels der Strommessmittel zu bestimmen, ob Strom über die Schaltanordnung zwischen der ersten Anschlussgruppe und der zweiten Anschlussgruppe fließt als auch den Schaltzustand der Schaltanordnung über die Steuereinheit zu verändern, muss auch bei einer mehrere in Reihe geschaltete Schalter umfassenden Installation keine zusätzliche Leitung mit einer diesen Schaltern parallel geschalteten, fernsteuerbaren Schaltanordnung bereitgestellt werden, die die Reihenschaltung bei nicht dem vom Benutzer per Fernsteuersignal geforderten Schaltzustand entsprechender Schaltzustandskombination überbrücken kann, um auf diese Weise dennoch den gewünschten Zustand herzustellen. Dies verringert den Montageaufwand und erlaubt, die Herstellung der Fernbedienbarkeit durch den Austausch bloß eines konventionellen Schalters durch einen erfindungsgemäßen fernsteuerbaren Schalter.

Insbesondere in Wohnräumen ist weiterhin von Bedeutung, dass daher das Anbringen des fernsteuerbaren Schalters ausgeführt werden kann, ohne dass in nennenswertem Umfang Schmutz, wie beispielsweise abgelöster Putz oder dergleichen, anfällt. Dies kann die Entscheidung zur Umrüstung auf einen fernsteuerbaren Schalter erheblich erleichtern. Als ein weiterer möglicher Vorteil tritt hinzu, dass der fernsteuerbare Schalter in seiner Gesamtheit und damit auch die Steuereinheit am vormaligen Ort des konventionellen Schalters angebracht werden können. Dazu kann der fernsteuerbare Schalter als bauliche Einheit ausgestaltet sein, bei dem zum Beispiel alle Komponenten auf einem gemeinsamen Träger angeordnet sind. Üblicherweise sind konventionelle Schalter, da sie einem Bediener bequem zugänglich sein sollen, ohne dass dieser etwa auf eine Leiter steigen oder sich bücken müsste um den Schalter zu erreichen. Muss zum Umrüsten auf einen fernsteuerbaren Schalter an keiner anderen Stellen in eine bestehende Elektroinstallation eingegriffen werden als am Ort des zu ersetzenden Schalters, muss insbesondere kein Zugriff auf eine Abzweigdose, die häufig schwer zugänglich in relativ größer Höhe oder in Raumecken angeordnet sind, erfolgen, kann die Installation des fernsteuerbaren Schalters besonders unkompliziert und zügig durchführbar sein.

Mittels der Strommessmittel kann gemäß Ausführungsbeispielen der Erfindung feststellbar sein, ob überhaupt ein Schaltzustand existiert, in dem ein Verbraucher über die Schaltanordnung des fernsteuerbaren Schalters mit Spannungsversorgungsmitteln verbunden ist. Unterscheidet sich das Ausgangssignal der Strommessmittel im ersten Schaltzustand nicht vom Ausgangssignal der Strommessmittel im zweiten Schaltzustand, was durch einen Vergleich der Ausgangssignale seitens der fernsteuerbaren Steuereinheit überprüfbar sein kann, deutet dies beispielsweise darauf hin, dass der Verbraucher defekt ist. Zum Beispiel kann es sich um eine durchgebrannte Glühlampe handeln.

Der erfindungsgemäße fernsteuerbare Schalter kann aber nicht nur als Ersatz für einen konventionellen Schalter dienen. Er kann in dieser Funktion auch direkt beim Aufbau einer neuen Installation zusammen mit einem konventionellen, d.h. nicht fernsteuerbaren Schalter, montiert werden. Ebenso können auch mehrere Schalter einer Installation fernsteuerbare Schalter sein. Durch entsprechende Konfiguration der das Fernsteuersignal liefernden Einrichtung kann in einem solchen Fall beispielsweise dafür gesorgt werden, dass das Fernsteuersignal nur an die fernsteuerbare Steuereinheit von einem der fernsteuerbaren Schalter adressiert wird, so dass über das Fernsteuersignal nur der Schaltzustand der Schaltanordnung dieses fernsteuerbaren Schalters beeinflussbar ist. Die Verwendung mehrerer fernsteuerbarer Schalter bietet den Vorteil, dass keine konventionellen Schalter vorgehalten werden müssen. Zudem kann auf diese Weise Redundanz geschaffen werden. Fällt die fernsteuerbare Steuereinheit eines fernsteuerbaren Schalters aus, kann ohne Austausch dieses Schalters durch bloße Umkonfiguration der von der das Fernsteuersignal liefernden Einrichtung verwendeten Adressierung die nicht gestörte oder defekte fernsteuerbare Steuereinheit eines anderen fernsteuerbaren Schalters angesprochen werden.

Der fernsteuerbare Schalter der vorliegenden Erfindung kann in verschiedenen Schaltungen eingesetzt werden. So ist neben der Integration in eine Wechselschaltung unter anderem auch die Verwendung in einer Ausschaltung möglich, indem beispielsweise der zweite Ausgang der zweiten Anschlussgruppe ungenutzt bleibt. Auch kann der Schalter einen Wechselschalter in einer Kreuzschaltung ersetzen. Der fernsteuerbare Schalter kann insbesondere als Unterputzschalter ausgestaltet sein.

Die fernsteuerbare Steuereinheit kann Empfangsmittel zum Empfang des Fernsteuersignals aufweisen. Diese können verschiedenartig ausgebildet sein. So ist es einerseits denkbar, Empfangsmittel vorzusehen, die für den drahtgebundenen Empfang eines Fernsteuersignals ausgelegt sind, etwa über einen Europäischen Installationsbus (EIB) oder ein KNX-Bussystem. Anderseits können auch Empfangsmittel für den drahtlosen Empfang verwendet werden. Dazu kann entsprechend des zur drahtlosen Übertragung genutzten Verfahrens eine Antenne, ein Infrarotsensor etc. Bestandteil der Empfangsmittel sein. Sowohl bei drahtgebundener als auch bei drahtloser Übertragung des Fernsteuersignals zu einer fernsteuerbaren Steuereinheit können beliebige geeignete Protokolle eingesetzt werden. Es ist lediglich erforderlich, die fernsteuerbare Steuereinheit entsprechend der verwendeten Übertragungsart auszugestalten.

Zum Erzeugen des Schaltsignals kann die fernsteuerbare Steuereinheit Signalerzeugungsmittel umfassen, die eingerichtet sind, das Schaltsignal zu erzeugen. Für die Ausgestaltung der Signalerzeugungsmittel existiert eine Vielzahl von Möglichkeiten. Unter anderem können sie als integrierter Schaltkreis, beispielsweise als anwendungsspezifische integrierte Schaltung (engl. application specific integrated circuit, ASIC), als Mikroprozessor, als FPGA (engl. field programmable gate array) oder als digitaler Signalprozessor (engl. digital signal processor, DSP) ausgestaltet sein. Auch können Speichermittel, beispielsweise Speicher mit wahlfreiem Zugriff (engl. random access memory, RAM) oder Festwertspeicher (engl. read only memory, ROM) vorgesehen sein, die Programmcode mit Instruktionen enthalten, die bei Ausführung auf dem integrierten Schaltkreis, die fernsteuerbare Steuereinheit veranlasst, ein auf dem Fernsteuersignal basierendes Schaltsignal zu erzeugen, wobei der Speicher mit wahlfreiem Zugriff während des Programmablaufs erzeugte Operanden aufnehmen kann.

Die Schaltanordnung, die mittels des Schaltsignals zwischen einem ersten Schaltzustand und einem zweiten Schaltzustand schaltbar ist, kann ein oder mehrere Schaltmittel umfassen. Dabei können als Schaltmittel verschiedenste Komponenten verwendet werden. So können solche Schaltmittel zum Beispiel als Relais ausgestaltet sein oder auch Halbleiterbauelemente umfassen. Das Schaltsignal der Steuereinheit kann der Schaltanordnung zugeführt werden, so dass deren Schaltmittel einen Schaltvorgang ausführen.

Erfindungsgemäß umfasst der fernsteuerbare Schalter eine erste Anschlussgruppe und eine zweite Anschlussgruppe. Die erste Anschlussgruppe umfasst zumindest einen Anschluss. Die zweite Anschlussgruppe umfasst einen ersten Anschluss, der im ersten Schaltzustand der Schaltanordnung elektrisch mit dem Anschluss der ersten Anschlussgruppe verbunden ist, und die zweite Anschlussgruppe umfasst einen zweiten Anschluss, der im zweiten Schaltzustand der Schaltanordnung elektrisch mit dem Anschluss der ersten Anschlussgruppe verbunden ist.

Besteht die Schaltanordnung zum Beispiel aus einem Relais, kann aufgrund des Schaltsignals der fernsteuerbaren Steuereinheit das Relais die in den jeweiligen Schaltzuständen geforderten elektrischen Verbindungen zwischen dem Anschluss der ersten Anschlussgruppe und den Anschlüssen der zweiten Anschlussgruppe herstellen.

Die Schaltanordnung kann unter anderem aber auch aus Halbleiterbauelementen aufgebaut sein. Beispielsweise kann sowohl dem ersten Anschluss der zweiten Anschlussgruppe als auch dem zweiten Anschluss der zweiten Anschlussgruppe ein bipolarer Transistor oder ein Metall-Oxid-Halbleiter-Feldeffekttransistor (engl. metal oxide semiconductor fieldeffect transistor, MOSFET) als Schaltelemente vorgeschaltet sein. Mittels des Schaltsignals kann dann entweder das Schaltelement am ersten Anschluss der zweiten Anschlussgruppe oder das Schaltelement am zweiten Anschluss der zweiten Anschlussgruppe in einen Zustand versetzt werden, in dem es einen Stromfluss vom ersten Anschluss der ersten Anschlussgruppe zum jeweiligen Anschluss der zweiten Anschlussgruppe erlaubt. Somit kann der erste oder der zweite Schaltzustand eingenommen werden. Auch der Einsatz eines Triacs ist möglich. Vorteilhaft kann in allen diesen Fällen sein, dass nicht nur beeinflusst werden kann, welchen Schaltzustand die Schaltanordnung einnehmen soll, sondern auch bestimmbar sein kann, mit welchem Faktor ein die Schaltanordnung durchlaufendes Signal verstärkt werden soll.

Die vorliegende Erfindung sieht vor, dass im Strompfad des Anschlusses der ersten Anschlussgruppe, der Schaltanordnung und der zweiten Anschlussgruppe angeordnete Strommessmittel zum Erzeugen eines den gemessenen Strom repräsentierenden Ausgangssignals vorgesehen sind. Dazu können die Strommessmittel mit dem Anschluss der ersten Anschlussgruppe verbundenen sein und im ersten Schaltzustand der Schaltanordnung über die Schaltanordnung mit dem ersten Anschluss der zweiten Anschlussgruppe verbunden sein, während sie im zweiten Schaltzustand der Schaltanordnung über die Schaltanordnung mit dem zweiten Anschluss der zweiten Anschlussgruppe verbunden sind.

Es werden keinerlei Beschränkungen bezüglich der Art der verwendeten Strommessmittel gemacht. Insbesondere können die Strommessmittel auch für eine indirekte Strommessung eingerichtet sein. So können sie zum Beispiel in Form eines Hall-Sensors und somit für die Strommessung über die Bestimmung einer magnetischen Flussdichte ausgestaltet sein, wobei der Hall-Sensor als den gemessenen Strom repräsentierendes Ausgangssignal die magnetische Flussdichte liefert. Ebenso kann die Strommessung über die Messung einer Spannung, die über einem Shunt-Widerstand bekannter Größe abfällt, erfolgen und das den gemessenen Strom repräsentierende Ausgangssignal kann die gemessene Spannung sein. Damit die fernsteuerbare Steuereinheit basierend auf dem Ausgangssignal der Strommessmittel und einem Fernsteuersignal ein Schaltsignal erzeugen kann, können die Strommessmittel eingerichtet sein, der Steuereinheit ein den gemessenen Strom repräsentierendes Ausgangssignal zur Verfügung zu stellen.

Gemäß einem Ausführungsbeispiel umfasst der fernsteuerbare Schalter Betätigungsmittel, insbesondere Tastmittel, zum Erzeugen eines Betätigungssignals zum Schalten der Schaltanordnung. Eine Auswahl im Kontext der Erfindung verwendbarer Betätigungsmittel umfasst einen Taster, der während seiner Betätigung durch einen Bediener einen Stromkreis schließt, der ansonsten unterbrochen ist, so dass bei Betätigung als Betätigungssignal ein Stromimpuls erzeugt wird. Die Ausgestaltung als Taster kann aufgrund geringer Baugröße vorteilhaft sein. Eine mögliche Alternative ist die Ausgestaltung der Betätigungsmittel als einen einen Stromkreis schließenden oder unterbrechenden Schalter, der somit als Betätigungssignal einen Umschaltimpuls erzeugt. Als eine dritte Variante sei ein Berührungssensor, beispielsweise ein Touchscreen genannt, der bei Berührung, d.h. Betätigung, ein Betätigungssignal ausgibt. Durch das Bereitstellen der Betätigungsmittel zum Erzeugen eines Betätigungssignals zum Schalten der Schaltanordnung kann die konventionelle Schaltbarkeit der Schaltanordnung erhalten bleiben, so dass Benutzer nicht zu einer Umstellung ihrer Bediengewohnheiten gezwungen werden, während gleichzeitig das ferngesteuerte Auslösen eines Schaltvorgangs ermöglicht wird.

Bei Ausführungsbeispielen der Erfindung sind die Betätigungsmittel der fernsteuerbaren Steuereinheit zugeordnet, und die fernsteuerbare Steuereinheit ist eingerichtet, ein auf dem Betätigungssignal der Betätigungsmittel basierendes Schaltsignal zum Schalten der Schaltanordnung zu erzeugen.

So kann, wenn ein Benutzer die Betätigungsmittel betätigt, das von den Betätigungsmitteln daraufhin erzeugte Betätigungssignal nicht unmittelbar der Schaltanordnung zugeführt, sondern an die fernsteuerbare Steuereinheit weitergeleitet werden, die auf Basis des Betätigungssignals ein Schaltsignal erzeugt, welches wiederum an die Schaltanordnung weitergeleitet wird, um einen Schaltvorgang herbeizuführen. Dies kann den Einsatz einfacher Betätigungsmittel wie zum Beispiel eines Tasters erlauben, da nötigenfalls komplexere oder länger andauernde Schaltsignale von den Signalerzeugungsmitteln der fernsteuerbaren Steuereinheit auf Basis des Betätigungssignals erzeugt werden können.

Gemäß einem Ausführungsbeispiel ist die fernsteuerbare Steuereinheit eingerichtet, aufgrund des Betätigungssignals einen Energiesparzustand zu verlassen.

Wird von der fernsteuerbaren Steuereinheit über längere Zeit kein Fernsteuersignal empfangen, kann es wünschenswert sein, ihre Leistungsaufnahme zu reduzieren. Dies kann zum Beispiel über ein Abschalten des Teils der fernsteuerbaren Steuereinheit, der zum Empfang des Fernsteuersignals oder zum Senden von Signalen dient, beispielsweise einem Kommunikationsmodul, realisiert werden. Entsprechend des Ausführungsbeispiels kann durch die Betätigung der Betätigungsmittel der Energiesparzustand verlassen und die fernsteuerbare Steuereinheit somit in einen empfangsbereiten Zustand zurückversetzt werden. Anders ausgedrückt, wird sie aus einem Ruhezustand aufgeweckt. Dabei kann vorgesehen sein, dass eine bestimmte Betätigungssignalfolge, beispielsweise zwei Betätigungssignale in kurzem zeitlichem Abstand, bei der fernsteuerbaren Steuereinheit eingehen muss, damit diese den Energiesparzustand verlässt. Auf diese Weise kann ermöglicht werden, dass durch Betätigung der Betätigungsmittel ein Schaltzustandswechsel der Schaltanordnung ohne ein gleichzeitiges Aufwecken der fernsteuerbaren Steuereinheit bewirkt werden kann.

Andererseits können gemäß eines Ausführungsbeispiels der Erfindung die Betätigungsmittel der Schaltanordnung zugeordnet sein, wobei die Schaltanordnung unmittelbar mittels des Betätigungssignals der Betätigungsmittel zwischen dem ersten Schaltzustand und dem zweiten Schaltzustand schaltbar ist. Dies kann die direkte Beeinflussung der Schaltanordnung durch das Betätigungssignal ohne Rückgriff auf die fernsteuerbare Steuereinheit erlauben. Unter anderem kann hierdurch erreicht werden, dass die Schaltanordnung auch dann zumindest manuell schaltbar bleibt, wenn eine Funktionsstörung der fernsteuerbaren Steuereinheit vorliegt. Sofern eine dauerhafte Signalzuführung benötigt wird, um einen Schaltzustand für die gewünschte Zeitspanne aufrechtzuerhalten, können, wenn zunächst durch die Betätigungsmittel nur ein kurzeitiges Betätigungssignal erzeugt werden kann, das Betätigungssignal aber unter Umgehung der fernsteuerbaren Steuereinheit ein Änderung des Schaltzustands der Schaltmittel der Schaltanordnung, z.B. eines Relais, auslösen soll, Mittel vorgesehen werden, denen das Betätigungssignal zugeführt wird und die ausgehend von dem Betätigungssignal den damit herbeizuführenden Schaltzustand solange aufrecht erhalten, bis durch ein neues Betätigungssignal angezeigt wird, dass in einen anderen Schaltzustand geschaltet werden soll.

Gemäß eines Ausführungsbeispiels der Erfindung ist die fernsteuerbare Steuereinheit eingerichtet, das Fernsteuersignal drahtlos zu empfangen. Sie kann für verschiedene Übertragungstechniken ausgelegt sein. Der Empfang von Infrarotfernsteuersignalen ist ebenso möglich wie der Empfang von Funksignalen. Auch bezüglich der dabei eingesetzten Protokolle werden keinerlei Beschränkungen gemacht. Als nur ein Beispiel für ein einsetzbares Protokoll sei das auf dem IEEE-Standard 802.15.4 basierende ZigBee Protokoll genannt. Empfangsmitteln zum Empfang eines Fernsteuersignals, die für dieses Protokoll ausgelegt sind, können besonders simpel aufgebaut sein, und sich durch geringe Kosten sowie einen niedrigen Energieverbrauch auszeichnen.

Die Verwendung einer fernsteuerbaren Steuereinheit, die eingerichtet ist, das Fernsteuersignal drahtlos zu empfangen, kann, da keine Leitung für die Übertragung des Fernsteuersignals erforderlich ist, zur Installierbarkeit des fernsteuerbaren Schalters mit besonders geringem Aufwand beitragen.

Beispielhafte Ausführungsformen der vorliegenden Erfindung sehen vor, dass die fernsteuerbare Steuereinheit eingerichtet ist, das Fernsteuersignal von einer Einrichtung eines Gebäudeautomationssystems zu empfangen. Dabei kann es sich um verschiedenste Einrichtungen des Gebäudeautomationssystems handeln. Um ein erstes Beispiel zu nennen, kann es sich um eine Bedieneinrichtung handeln, die einem Bediener die zentralisierte Bedienung verschiedenster elektrischer Komponenten in einem Gebäude ermöglicht. Zu diesem Zweck kann die Bedieneinrichtung Eingabemittel wie Tasten und Ausgabemittel wie eine Anzeige aufweisen. Die Eingabemittel und die Ausgabemittel können kombiniert als Touchscreen vorliegen. Mit der Bedieneinrichtung können Sensoren in Verbindung stehen, die verschiedene Parameter erfassen und der Bedieneinrichtung zur Verfügung stellen, so dass diese die Werte der über die Sensoren erfassten Parameter berücksichtigt und daraufhin ein entsprechendes Fernsteuersignal generiert. Die das Fernsteuersignal ausgebende Einrichtung des Gebäudeautomationssystems muss für die Ausgabe eines Fernsteuersignals nicht notwendigerweise auf die Befehle eines Benutzers angewiesen sein. So kann sie beispielsweise die Ausgabe eines Fernsteuersignals und die darin kodierte Information lediglich von Sensormesswerten oder auch von der Uhrzeit abhängig machen. Es kann sich bei der Einrichtung des Gebäudeautomationssystems ebenfalls um eine Vermittlungseinrichtung handeln, die zum Beispiel über eine Funkfernbedienung ein Fernsteuersignal erhält und es an den fernsteuerbaren Schalter weiterleitet. Schließlich kann auch ein Sensor, der ein den Wert des von ihm erfassten Parameters repräsentierendes Signal an die fernsteuerbaren Steuereinheit als Fernsteuersignal überträgt, als eine derartige Einrichtung eines Gebäudeautomationssystems betrachtet werden.

Durch die Möglichkeit, das Fernsteuersignal über eine Einrichtung eines Gebäudeautomationssystems wie einer zentralen Bedieneinrichtung zu erzeugen, wird ein Benutzer in die Lage versetzt, von einer Stelle aus den Schaltzustand der Schaltanordnung des fernsteuerbaren Schalters zu beeinflussen und so etwa einen über den fernsteuerbaren Schalter an das elektrische Netz angeschlossenen Verbraucher mit Energie zu versorgen bzw. die Energiezufuhr zu diesem zu unterbrechen. Ist die Einrichtung des Gebäudeautomationssystems mit Sensoren verbunden, können die von diesen Sensoren übermittelten Informationen bei der Erzeugung eines Fernsteuersignals berücksichtigt werden oder diese sogar erst veranlassen. Wird beispielsweise über einen Helligkeitssensor die Helligkeit in einem Raum gemessen und von der Einrichtung festgestellt, dass diese unter einem bestimmten Schwellwert liegt, kann die Einrichtung ein Fernsteuersignal generieren. Wenn es von der fernsteuerbaren Steuereinheit empfangen wurde, kann es diese veranlassen, dafür zu sorgen, dass die Schaltanordnung in einen Schaltzustand versetzt wird, in dem über sie mit dem elektrischen Netz verbundene Leuchtmittel mit Energie versorgt werden und so eine Helligkeitszunahme herbeiführen. Die Einrichtung kann alternativ oder zusätzlich auch erfassen, ob Betätigungsmittel betätigt wurden, um eine Jalousie elektrisch hoch oder runter zu fahren. Somit wird es über die zusätzliche Verknüpfung mit der aktuellen Uhrzeit möglich, dass am Tag das Hochfahren der Jalousie bewirkt, dass ein Fernsteuersignal erzeugt wird, das für das Abschalten der künstlichen Beleuchtung in dem betreffenden Raum sorgt. Hier wird deutlich, dass neben einer Komfortsteigerung für den Benutzer auch eine Reduzierung des Energieverbrauchs möglich wird, wenn die fernsteuerbare Steuereinheit eingerichtet ist, das Fernsteuersignal von einer Einrichtung eines Gebäudeautomationssystems zu empfangen.

Ausführungsformen der Erfindung sehen vor, dass die fernsteuerbare Steuereinheit eingerichtet ist, Signale an die Einrichtung des Gebäudeautomationssystems zu senden. Dazu kann die fernsteuerbare Steuereinheit beispielsweise Sendemittel umfassen, die für die drahtgebundene oder für die drahtlose Signalübertragung an die Einrichtung ausgebildet sind. Es können unterschiedlichste Übertragungstechnologien, wie Funk- oder Infrarotübertragung, verwendet werden. Einige dieser Ausführungsformen können es ermöglichen, Statusinformationen des fernsteuerbaren Schalters an die Einrichtung des Gebäudeautomationssystems zu senden. Beispielweise kann das den gemessenen Strom repräsentierende Ausgangssignal der Strommessmittel als Signal der fernsteuerbaren Steuereinheit an die Einrichtung des Gebäudeautomationssystems übertragen werden. Diese kann daraus ableiten, ob im aktuellen Schaltzustand der Schaltanordnung des fernsteuerbaren Schalters ein Verbraucher über die Schaltanordnung mit Spannungsversorgungsmitteln elektrisch verbunden und somit in einem aktiven Zustand ist.

Sind in dem den gemessenen Strom repräsentierenden Ausgangssignal der Strommessmittel Informationen über die konkrete Stromstärke enthalten, kann die Einrichtung anhand des Signals der fernsteuerbaren Steuereinheit bei bekannter am Verbraucher anliegender Spannung, z.B. der Netzspannung, die vom Verbraucher aktuell aufgenommene elektrische Leistung erfassen. Ist die Einrichtung des Gebäudeautomationssystems mit Anzeigemitteln versehen, kann eine Person über diese elektrische Leistung informiert werden. Bei der Einrichtung kann es sich aber auch um einen Aktor handeln, der z.B. in Abhängigkeit von Signalen von der fernsteuerbaren Steuereinheit agiert.

Entsprechend eines Ausführungsbeispiels ist die fernsteuerbare Steuereinheit eingerichtet, die Signale drahtlos an die Einrichtung des Gebäudeautomationssystems zu senden. Insbesondere wenn die fernsteuerbare Steuereinheit eingerichtet ist, das Fernsteuersignal drahtlos zu empfangen, kann dies von Vorteil sein, da dann weder für den Empfang des Fernsteuersignals noch für das Senden von Signalen Leitungen benötigt werden. Um den technischen Aufwand gering zu halten, kann es empfehlenswert sein, wenn sowohl zum Empfang eines Fernsteuersignals als auch zum Senden von Signalen an die Einrichtung des Gebäudeautomationssystems dieselbe Übertragungstechnik, beispielsweise Funkübertragung gemäß des ZigBee Protokolls, genutzt wird.

Ein Ausführungsbeispiel der vorliegenden Erfindung sieht vor, dass der fernsteuerbare Schalter zur Spannungsversorgung eines Verbrauchers mit Spannungsversorgungsmitteln verbunden ist und die von den Spannungsversorgungsmitteln zur Verfügung gestellte Spannung zur Spannungsversorgung der fernsteuerbaren Steuereinheit dient. Die Spannungsversorgungsmittel können zum Beispiel ein Netzanschluss eines Wechselstromnetzes sein, wobei über den fernsteuerbaren Schalter bei entsprechendem Schaltzustand die Netzspannung an den Verbraucher angelegt wird, während in einem anderen Schaltzustand keine Spannung am Verbraucher anliegt. Dient der fernsteuerbare Schalter zur Durchschaltung der Spannung der Spannungsversorgungsmittel, empfiehlt es sich, die ohnehin am Ort des fernsteuerbaren Schalters verfügbare Spannung auch zur Spannungsversorgung der fernsteuerbaren Steuereinheit zu nutzen. Beispielsweise kann es hierdurch möglich sein, dass zur Spannungsversorgung der fernsteuerbaren Steuereinheit keine zusätzlichen Leitungen verlegt werden müssen. Somit kann mit geringem Aufwand, eine dauerhafte und verlässliche Spannungsversorgung der fernsteuerbaren Steuereinheit erreicht werden. Zur Spannungsversorgung können zusätzliche Komponenten, wie zum Beispiel ein Netzteil, das die von den Spannungsversorgungsmitteln gelieferte Spannung an die Anforderungen der fernsteuerbaren Steuereinheit anpasst, vorgesehen sein.

Alternativ zur Spannungsversorgung der fernsteuerbaren Steuereinheit über Spannungsversorgungsmittel zur Spannungsversorgung eines Verbrauchers kann diese auch über eine Batterie, einen Akkumulator oder einen Kondensator, z.B. einen Doppelschicht-Kondensator (Goldcap), erfolgen.

Entsprechend einer beispielhaften Ausführungsform, bei der der fernsteuerbare Schalter zur Spannungsversorgung eines Verbrauchers mit Spannungsversorgungsmitteln verbunden ist und die von den Spannungsversorgungsmitteln zur Verfügung gestellte Spannung auch zur Spannungsversorgung der fernsteuerbaren Steuereinheit dient, kann vorgesehen sein, dass der erste Anschluss der zweiten Anschlussgruppe und der zweite Anschluss der zweiten Anschlussgruppe jeweils elektrisch mit der fernsteuerbaren Steuereinheit verbunden sind. Auf diese Weise ist es möglich, dass unabhängig vom Schaltzustand der Schaltanordnung und unabhängig von der Verschaltung des fernsteuerbaren Schalters in einer Installation, stets die Spannungsversorgung der fernsteuerbaren Steuereinheit gewährleistet ist.

So kann der fernsteuerbare Schalter beispielsweise von den Spannungsversorgungsmitteln aus betrachtet in einer Kreuzschaltung sowohl als erster wie auch als zweiter Schalter eingesetzt werden. Zwar könnte auch der Anschluss der ersten Anschlussgruppe des fernsteuerbaren Schalters mit der fernsteuerbaren Steuereinheit elektrisch verbunden sein, wenn dieser als Eingang des fernsteuerbaren Schalters dient und der fernsteuerbare Schalter der erste Schalter der Kreuzschaltung ist, da der Eingang dann auf dem von den Spannungsversorgungsmitteln bereitgestellten Potential liegen würde. Dagegen müssten aber beim Einsatz des fernsteuerbaren Schalters als zweitem Schalter der Wechselschaltung die Anschlüsse der zweiten Anschlussgruppe als Eingang dienen, womit es davon abhängt, in welchem Schaltzustand der erste Schalter ist, welcher Anschluss der zweiten Anschlussgruppe auf dem von den Spannungsversorgungsmitteln bereitgestellten Potential liegt. Dadurch, dass bei dem Ausführungsbeispiel sowohl der erste Anschluss der zweiten Anschlussgruppe als auch der zweite Anschluss der zweiten Anschlussgruppe elektrisch mit der fernsteuerbaren Steuereinheit verbunden sind, kann der fernsteuerbare Schalter unverändert als erster und zweiter Schalter der Wechselschaltung eingesetzt werden und dennoch die Spannungsversorgung der fernsteuerbaren Steuereinheit gesichert werden.

Beim Umschalten der Schaltanordnung kann es zu einer kurzzeitigen Unterbrechung der Spannungsversorgung kommen. Um einen aktiven Betriebszustand der fernsteuerbaren Steuereinheit dennoch aufrechtzuerhalten, können Überbrückungsmittel vorgesehen sein. Ein Beispiel für derartige Überbrückungsmittel ist ein Kondensator, der bei nicht unterbrochener Spannungsversorgung geladen wird und als Energiespeicher für Unterbrechungsphasen dient.

Sind die Spannungsversorgungsmittel als Netzanschluss eines Wechselstromnetzes ausgebildet und dient der fernsteuerbare Schalter zum Schalten eines Außenleiters des Wechselstromnetzes, kann die fernsteuerbare Steuereinheit zur Spannungsversorgung zusätzlich zu den elektrischen Verbindungen mit dem ersten und dem zweiten Anschluss der zweiten Anschlussgruppe mit dem Neutralleiter des Wechselstromnetzes verbunden sein. Häufig sind im Bereich der Installationstechnik Außenleiter und Neutralleiter in einem gemeinsamen Kabelmantel geführt, so dass, wenn der zu schaltende Außenleiter an einen Anschluss des fernsteuerbaren Schalters angeschlossen werden kann, auch die Möglichkeit besteht, ohne eine zusätzliche Leitung zu verlegen, den Neutralleiteranschluss mit der fernsteuerbaren Steuereinheit zu verbinden.

Gemäß einem weiteren Beispiel für eine Ausführungsform des fernsteuerbaren Schalters umfasst die erste Anschlussgruppe einen ersten Anschluss und einen zweiten Anschluss. Im ersten Schaltzustand der Schaltanordnung ist der erste Anschluss der ersten Anschlussgruppe über die Schaltanordnung elektrisch mit dem ersten Anschluss der zweiten Anschlussgruppe verbunden und der zweite Anschluss der ersten Anschlussgruppe ist über die Schaltanordnung elektrisch mit dem zweiten Anschluss der zweiten Anschlussgruppe verbunden. Im zweiten Schaltzustand der Schaltanordnung ist der erste Anschluss der ersten Anschlussgruppe über die Schaltanordnung elektrisch mit dem zweiten Anschluss der zweiten Anschlussgruppe verbunden und der zweite Anschluss der ersten Anschlussgruppe ist über die Schaltanordnung elektrisch mit dem ersten Anschluss der zweiten Anschlussgruppe verbunden. Es sind im Strompfad des ersten Anschlusses der ersten Anschlussgruppe, der Schaltanordnung und der zweiten Anschlussgruppe angeordnete erste Strommessmittel zum Erzeugen eines den gemessenen Strom repräsentierenden ersten Ausgangssignals vorgesehen. Ebenso sind im Strompfad des zweiten Anschlusses der ersten Anschlussgruppe, der Schaltanordnung und der zweiten Anschlussgruppe angeordnete zweite Strommessmittel zum Erzeugen eines den gemessenen Strom repräsentierenden zweiten Ausgangssignals vorgesehen. Weiterhin ist die fernsteuerbare Steuereinheit eingerichtet, das Schaltsignal basierend auf dem ersten Ausgangssignal der ersten Strommessmittel, dem zweiten Ausgangssignal der zweiten Strommessmittel und dem Fernsteuersignal zu erzeugen.

Eine derartige Ausführungsform des fernsteuerbaren Schalters kann in einer Kreuzschaltung einen nicht fernsteuerbaren Kreuzschalter ersetzen und so die Fernbedienbarkeit der Schaltung herstellen. Dazu können die Anschlüsse der ersten Anschlussgruppe als Eingänge dienen, während die Anschlüsse der zweiten Anschlussgruppe als Ausgänge verwendet werden. Ebenso ist jedoch die umgekehrte Nutzung der Anschlüsse der ersten und der zweiten Anschlussgruppe möglich.

Die Schaltanordnung kann beispielsweise erste Schaltmittel und zweite Schaltmittel umfassen, wobei die ersten Schaltmittel und die zweiten Schaltmittel jeweils zwischen zwei Schaltzuständen schaltbar sind. Die ersten und die zweiten Schaltmittel können jeweils aus nur einem Schaltelement, z.B. einem Relais oder einem Triac, bestehen oder sie können mehrere Schaltelemente, z.B. bipolare Transistoren oder MOSFETs, umfassen.

Im ersten Schaltzustand der Schaltanordnung kann dann der erste Anschluss der ersten Anschlussgruppe über die ersten Schaltmittel der Schaltanordnung elektrisch mit dem ersten Anschluss der zweiten Anschlussgruppe verbunden sein und der zweite Anschluss der ersten Anschlussgruppe über die zweiten Schaltmittel der Schaltanordnung elektrisch mit dem zweiten Anschluss der zweiten Anschlussgruppe verbunden sein. Ebenso kann dann im zweiten Schaltzustand der Schaltanordnung der erste Anschluss der ersten Anschlussgruppe über die ersten Schaltmittel der Schaltanordnung elektrisch mit dem zweiten Anschluss der zweiten Anschlussgruppe verbunden sein und der zweite Anschluss der ersten Anschlussgruppe über die zweiten Schaltmittel der Schaltanordnung elektrisch mit dem ersten Anschluss der zweiten Anschlussgruppe verbunden sein. Die Anordnung der ersten Strommessmittel im Strompfad des ersten Anschlusses der ersten Anschlussgruppe, der Schaltanordnung und der zweiten Anschlussgruppe kann in diesem Fall bedeuten, dass die ersten Strommessmittel mit dem ersten Anschluss der ersten Anschlussgruppe verbunden sind. Im ersten Schaltzustand der Schaltanordnung sind sie zudem über die ersten Schaltmittel der Schaltanordnung mit dem ersten Anschluss der zweiten Anschlussgruppe verbunden und im zweiten Schaltzustand der Schaltanordnung sind sie über die ersten Schaltmittel der Schaltanordnung mit dem zweiten Anschluss der zweiten Anschlussgruppe verbunden. Entsprechend kann die Anordnung der zweiten Strommessmittel im Strompfad des zweiten Anschlusses der ersten Anschlussgruppe, der Schaltanordnung und der zweiten Anschlussgruppe derart realisiert sein, dass die zweiten Strommessmittel mit dem zweiten Anschluss der ersten Anschlussgruppe verbunden sind. Im ersten Schaltzustand der Schaltanordnung sind sie zudem über die zweiten Schaltmittel der Schaltanordnung mit dem zweiten Anschluss der zweiten Anschlussgruppe verbunden und im zweiten Schaltzustand der Schaltanordnung sind sie über die zweiten Schaltmittel der Schaltanordnung mit dem ersten Anschluss der zweiten Anschlussgruppe verbunden.

Wird der fernsteuerbare Schalter gemäß des hier erläuterten Ausführungsbeispiels anstelle eines konventionellen Kreuzschalters in einer Kreuzschaltung eingesetzt, über die ein Verbraucher mit Spannungsversorgungsmitteln verbindbar ist, kann, von den Spannungsversorgungsmitteln aus gesehen, ein erster Schalter der ersten Anschlussgruppe des fernsteuerbaren Schalter vorgeschaltet sein. Gleichzeitig kann ein zweiter Schalter der zweiten Anschlussgruppe des fernsteuerbaren Schalters nachgeschaltet sein. Abhängig vom Schaltzustand des ersten, vorgeschalteten Schalters, kann die Spannung der Spannungsversorgungsmittel entweder am ersten Anschluss der ersten Anschlussgruppe oder am zweiten Anschluss der ersten Anschlussgruppe anliegen. Abhängig vom Schaltzustand des zweiten, nachgeschalteten Schalters, kann die Spannung der Spannungsversorgung entweder über den ersten Anschluss der zweiten Anschlussgruppe oder über den zweiten Anschluss der zweiten Anschlussgruppe dem Verbraucher zugeführt werden. Da die ersten Strommessmittel im Strompfad des ersten Anschlusses der ersten Anschlussgruppe, der Schaltanordnung und der zweiten Anschlussgruppe angeordnet sind und die zweiten Strommessmittel im Strompfad des zweiten Anschlusses der ersten Anschlussgruppe, der Schaltanordnung und der zweiten Anschlussgruppe angeordnet sind, kann ein Schaltzustandswechsel der Schaltanordnung als Änderung des gemessenen Stroms stets an den ersten Strommessmitteln oder an den zweiten Strommessmitteln erkennbar sein. Damit kann die fernsteuerbare Steuereinheit feststellen, ob der mittels des Fernsteuersignals angeforderte Schaltzustand bereits vorliegt, oder ob ein Schaltvorgang der Schaltanordnung erfolgen muss, damit sich der durch das Fernsteuersignal geforderte Schaltzustand einstellt. Weil die fernsteuerbare Steuereinheit eingerichtet ist, das Schaltsignal basierend auf dem ersten Ausgangssignal der ersten Strommessmittel, dem zweiten Ausgangssignal der zweiten Strommessmittel und dem Fernsteuersignal zu erzeugen, kann sie dann mittels des Schaltsignals entweder einen Schaltvorgang einleiten oder den bisherigen Schaltzustand beibehalten.

Der fernsteuerbare Schalter gemäß dem hier diskutierten Beispiel kann in verschiedenen Schaltungen eingesetzt werden. So ist neben der Integration in eine Kreuzschaltung unter anderem auch die Verwendung in einer Wechselschaltung möglich, indem beispielsweise ein Anschluss einer Anschlussgruppe ungenutzt bleibt. Auch in einer Ausschaltung ist der fernsteuerbare Schalter verwendbar, wenn von der ersten und der zweiten Anschlussgruppe jeweils ein Anschluss ungenutzt bleibt. Ausführung der Erfindung sehen vor, dass der fernsteuerbaren Steuereinheit Tasterkennungsmittel zur Erkennung der Betätigung externer Tastmittel zugeordnet sind und die fernsteuerbare Steuereinheit eingerichtet ist, ein auf einem Tasterkennungssignal der Tasterkennungsmittel basierendes Schaltsignal zum Schalten der Schaltanordnung zu erzeugen. Hierbei ist es unerheblich, wie viele Anschlüsse die erste Anschlussgruppe umfasst.
Gemäß diesem Ausführungsbeispiel kann es möglich sein, den fernsteuerbaren Schalter in eine Tasterschaltung zu integrieren, da dieser auf die Betätigung externer Tastmittel reagieren kann, wobei der fernsteuerbare Schalter ebenfalls in einer Ausschaltung, einer Wechsel- oder gar einer Kreuzschaltung einsetzbar ist, so dass für alle diese Schaltungsarten nur ein Typ eines fernsteuerbaren Schalters vorgehalten werden muss.
Exemplarische Ausführungsformen der Erfindung beinhalten, dass die externen Tastmittel bei Betätigung einen Stromkreis schließen oder einen geschlossenen Stromkreis unterbrechen, wobei die Tasterkennungsmittel in den Stromkreis eingeschleift sind, als Widerstandsmessmittel ausgebildet sind und eingerichtet sind, der fernsteuerbaren Steuereinheit ein den von ihnen gemessenen Widerstand repräsentierendes Tasterkennungssignal zur Verfügung zu stellen.

Die Betätigung der Tastmittel durch einen Bediener, so dass beispielsweise ein Stromkreis geschlossen wird, der ansonsten unterbrochen ist, kann einen Stromimpuls erzeugen. Die in den Stromkreis eingeschleiften Widerstandsmessmittel können dies als schlagartiges Absinken des von ihnen gemessenen Widerstands wahrnehmen und die fernsteuerbare Steuereinheit kann ein Schaltsignal erzeugen und somit ein Umschalten der Schaltanordnung herbeiführen. Die Widerstandsmessmittel können einen Referenzspannungsgeber umfassen, der eine Referenzspannung für die Widerstandsmessung erzeugt. Dieser kann von einer Spannungsquelle gespeist werden, die auch zur Energieversorgung der fernsteuerbaren Steuereinheit dient. Die Widerstandsmessmittel können z.B. als Ohmmeter ausgebildet sein.

Ein erfindungsgemäßer fernsteuerbarer Schalter muss nicht zwingend mit einem oder mehreren weiteren Schaltern, die zu einer elektrischen Gebäudeinstallation gehören und beispielsweise in einer Wand montiert sind, zusammenwirken. Denkbar ist insbesondere auch, dass ein erfindungsgemäßer fernsteuerbarer Schalter mit einem konventionellen Schalter verschaltet wird, wobei letzterer unmittelbar an einem elektrischen Gerät angeordnet ist. Um nur ein Beispiel zu nennen, kann es sich bei dem elektrischen Gerät um eine Stehlampe handeln, die über eine konventionellen Schalter zum Einschalten und Ausschalten der Stehlampe verfügt. Der konventionelle Schalter kann beispielsweise am Netzkabel der Stehlampe oder auch am Lampenkörper selbst angeordnet sein. Zusätzlich kann ein erfindungsgemäßer Schalter vorgesehen sein, der zum Beispiel ebenfalls an dem Netzkabel beziehungsweise an dem Lampenkörper angeordnet und mit dem konventionellen Schalter in Reihe geschaltet ist, so dass die Fernsteuerbarkeit der Stehlampe gegeben ist. Es kann auch möglich sein, vorhandene Stehlampen mit einem erfindungsgemäßen fernsteuerbaren Schalter nachzurüsten. Es kann auch möglich sein, Stehlampen mit einem erfindungsgemäßen fernsteuerbaren Schalter auszurüsten, ohne einen weiteren konventionellen Schalter vorzusehen. Es wird darauf hingewiesen, dass die obigen Erläuterungen nicht nur bezogen auf Stehlampen, die hier lediglich als ein Beispiel gewählt wurden, gültig sind, sondern für andere elektrische Geräte in gleicher Weise gelten.

Weiterhin wird ein System vorgeschlagen, das eine Einrichtung eines Gebäudeautomationssystems zum Erzeugen eines Fernsteuersignals, einen fernsteuerbaren Schalter, dessen fernsteuerbare Steuereinheit eingerichtet ist, das Fernsteuersignal von der Einrichtung des Gebäudeautomationssystems zu empfangen, und einen elektrischen Verbraucher, der über den fernsteuerbaren Schalter entweder im ersten oder im zweiten Schaltzustand der Schaltanordnung des fernsteuerbaren Schalters mit Spannungsversorgungsmitteln verbunden ist, umfasst.

Die Erfindung wird im Folgenden anhand von neun Figuren, welche mehrere Ausführungsbeispiele zeigen, näher erläutert:
Dabei zeigen
- Fig. 1: eine schematische Darstellung eines fernsteuerbaren Schalters gemäß einem ersten Beispiel;
- Fig. 2: eine schematische Darstellung einer eine Wechselschaltung umfassenden Beleuchtungsinstallation gemäß dem Stand der Technik;
- Fig. 3: die Beleuchtungsinstallation aus Fig. 2, wobei ein Wechselschalter der Wechselschaltung durch den Schalter aus Fig. 1 ersetzt worden ist;
- Fig. 4: die Beleuchtungsinstallation aus Fig. 2, wobei ein Wechselschalter der Wechselschaltung durch einen fernsteuerbaren Schalter gemäß einem zweiten Beispiel ersetzt worden ist;
- Fig. 5: eine schematische Darstellung eines fernsteuerbaren Schalters gemäß einem dritten Beispiel;
- Fig. 6: eine schematische Darstellung einer eine Kreuzschaltung umfassenden Beleuchtungsinstallation mit dem fernsteuerbaren Schalter aus Fig. 5;
- Fig. 7: eine schematische Darstellung einer eine Tasterschaltung umfassenden Beleuchtungsinstallation mit einem fernsteuerbaren Schalter gemäß einem Ausführungsbeispiel;
- Fig. 8: eine schematische Darstellung einer eine Sparwechselschaltung umfassenden Beleuchtungsinstallation gemäß dem Stand der Technik;
- Fig. 9: die Beleuchtungsinstallation aus Fig. 8, wobei ein Wechselschalter der Sparwechselschaltung durch den fernsteuerbaren Schalter aus Fig. 7 ersetzt worden ist und der andere Wechselschalter durch einen Taster ersetzt worden ist.

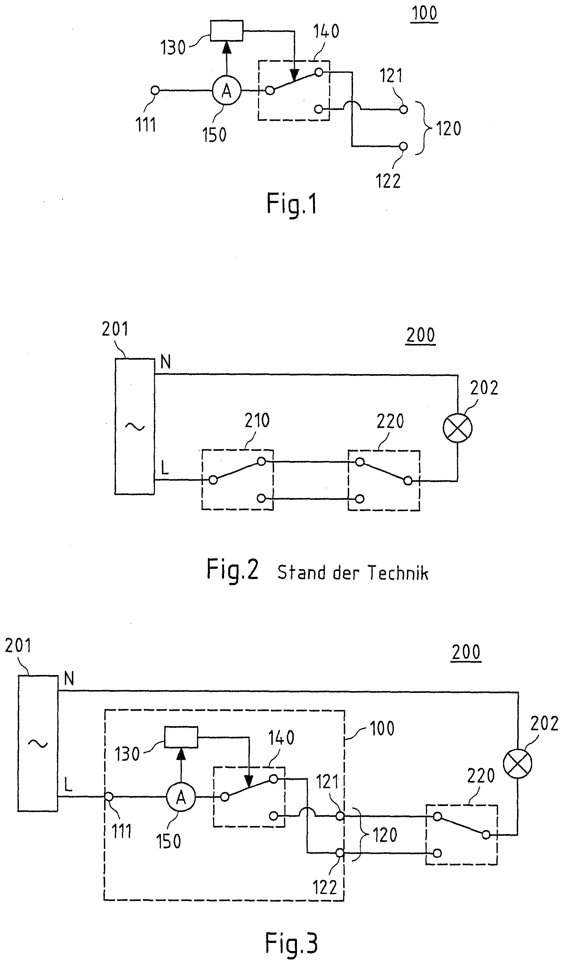

Fig. 1 zeigt eine schematische Darstellung eines fernsteuerbaren Schalters 100 gemäß einem ersten Beispiel. Der fernsteuerbare Schalter 100 umfasst eine erste Anschlussgruppe, die in diesem Beispiel aus einem Anschluss 111 besteht, und eine zweite Anschlussgruppe 120, die einen ersten Anschluss 121 und einen zweiten Anschluss 122 umfasst. Weiterhin umfasst der fernsteuerbare Schalter 100 eine fernsteuerbare Steuereinheit 130 zum Erzeugen eines Schaltsignals und eine Schaltanordnung 140, die mittels des Schaltsignals zwischen einem ersten Schaltzustand und einem zweiten Schaltzustand schaltbar ist. Dazu steht die fernsteuerbare Steuereinheit 130 mit der Schaltanordnung 140 in Verbindung, wie in Fig. 1 der von der fernsteuerbaren Steuereinheit 130 zur Schaltanordnung 140 weisende Pfeil anzeigt. Im ersten Schaltzustand der Schaltanordnung 140 ist der erste Anschluss 121 der zweiten Anschlussgruppe 120 elektrisch mit dem Anschluss 111 der ersten Anschlussgruppe verbunden. Im in Fig. 1 gezeigten zweiten Schaltzustand der Schaltanordnung 140 ist der zweite Anschluss 122 der zweiten Anschlussgruppe 120 elektrisch mit dem Anschluss 111 der ersten Anschlussgruppe verbunden. Im Strompfad des Anschlusses 111 der ersten Anschlussgruppe, der Schaltanordnung 140 und der zweiten Anschlussgruppe 120 sind Strommessmittel 150 zum Erzeugen eines den gemessenen Strom repräsentierenden Ausgangssignals angeordnet. Im Beispiel in Fig. 1 bedeutet dies, dass die Strommessmittel 150 mit dem Anschluss 111 der ersten Anschlussgruppe verbundenen sind und im ersten Schaltzustand der Schaltanordnung 140 über die Schaltanordnung 140 mit dem ersten Anschluss 121 der zweiten Anschlussgruppe 120 verbunden sind, während sie im zweiten Schaltzustand der Schaltanordnung 140 über die Schaltanordnung 140 mit dem zweiten Anschluss 122 der zweiten Anschlussgruppe 122 verbunden sind.

Die Strommessmittel 150 sind eingerichtet, der fernsteuerbaren Steuereinheit 130 ein den gemessenen Strom repräsentierendes Ausgangssignal zur Verfügung zu stellen, wie durch den von den Strommessmitteln 150 zur fernsteuerbaren Steuereinheit 130 verlaufenden Pfeil in Fig. 1 angedeutet wird. Die fernsteuerbare Steuereinheit 130 ist eingerichtet, das Schaltsignal basierend auf dem Ausgangssignal der Strommessmittel 150 und einem Fernsteuersignal zu erzeugen.

Im Folgenden wird die Erfindung beispielsweise im Kontext von Beleuchtungsinstallationen beschrieben.

Fig. 2 zeigt eine schematische Darstellung einer eine Wechselschaltung umfassenden Beleuchtungsinstallation 200 gemäß dem Stand der Technik.

Die Beleuchtungsinstallation 200 umfasst einen Netzanschluss 201 für ein Wechselstromnetz, einen Verbraucher in Form einer Glühlampe 202 sowie zwei als Wechselschalter ausgebildete konventionelle Bedienschalter 210 und 220, die mittels manueller Betätigung durch einen Benutzer schaltbar sind. Die Glühlampe 202 ist über den Netzanschluss 201 mit einem Neutralleiter N des Wechselstromnetzes verbunden. Über den ersten Wechselschalter 210 und den zweiten Wechselschalter 220 ist die Glühlampe 202 über den Netzanschluss 201 mit einem Außenleiter L des Wechselstromnetzes verbindbar. Ob eine Verbindung besteht hängt vom Schaltzustand des ersten Wechselschalters 210 und vom Schaltzustand des zweiten Wechselschalters 220 ab.

Fig. 3 zeigt die Beleuchtungsinstallation 200 aus Fig. 2, wobei der erste Wechselschalter 210 der Wechselschaltung durch den Schalter 100 aus Fig. 1 ersetzt worden ist.

Nachdem der Wechselschalter 210 gemäß Fig. 2 aus der Beleuchtungsinstallation 200 entfernt wurde, ist der fernsteuerbare Schalter 100 aus Fig. 1 an seiner Stelle montiert worden, um die Fernsteuerbarkeit der Beleuchtungsinstallation 200 herzustellen. Dazu sind lediglich die Leiter mit den Anschlüssen des fernsteuerbaren Schalters 100 verbunden worden, die zuvor mit dem konventionellen Wechselschalter 210 verbunden waren.

Mittels der Strommessmittel 150 kann erfasst werden, ob in dem jeweils vorliegenden Schaltzustand ein Strom über die Schaltanordnung 140 fließt. Dies ist wiederum ein Indikator dafür, ob im aktuellen Schaltzustand die Glühlampe 202 mit dem Außenleiter L des Wechselstromnetzes verbunden ist. Fordert ein der fernsteuerbaren Schaltanordnung 130 übermitteltes Fernsteuersignal zum Beispiel, dass die Glühlampe 202 eingeschaltet sein soll, d.h. dass sie mit Spannung versorgt werden soll, kann die fernsteuerbare Steuereinheit 130, da das den gemessenen Strom repräsentierende Ausgangssignal der Strommessmittel der fernsteuerbaren Steuereinheit 130 zugeführt wird, entscheiden, ob das Fernsteuersignal eine Schaltzustandsänderung der Schaltanordnung 140 notwendig macht, d.h. ob der gewünschte Zustand bereits vorliegt oder noch herzustellen ist.

Liegt der Zustand vor, d.h. verbindet bei dem in Fig. 3 gezeigten Schaltzustand des Wechselschalters 220 die Schaltanordnung 140 anders als in Fig. 3 gezeigt den Anschluss 111 und damit den Außenleiter L des Wechselstromnetzes elektrisch mit dem ersten Anschluss 121 der zweiten Anschlussgruppe 120, gibt die fernsteuerbare Steuereinheit 130, da sie eingerichtet ist, basierend auf dem Fernsteuersignal und dem Ausgangssignal ein Schaltsignal zu erzeugen, und da das Ausgangssignal der Strommessmittel anzeigt, dass der gewünschte Zustand bereits vorliegt, kein Schaltsignal an die Schaltanordnung 140 aus. Diese verharrt somit in ihrem aktuellen Schaltzustand.

Im umgekehrten und in Fig. 3 gezeigten Fall, d.h. wenn bei dem gezeigten Schaltzustand des Wechselschalters 220 die Schaltanordnung 140 den Anschluss 111 elektrisch mit dem zweiten Anschluss 122 der zweiten Anschlussgruppe 120 verbindet, so dass die Glühlampe nicht mit Spannung versorgt wird und die Strommessmittel 150 keine Stromfluss detektieren, generiert die fernsteuerbare Steuereinheit 140 ein Schaltsignal das einen Schaltzustandswechsel der Schaltanordnung 140 hervorruft, um so die Spannungsversorgung der Glühlampe 202 herzustellen.

Ohne das Ausgangssignal der Strommessmittel 150 wäre der fernsteuerbaren Steuereinheit 140 lediglich ein meist nicht sinnvolles Umschalten von einem unbekannten Zustand in einen anderen dementsprechend auch unbekannten Zustand möglich. Dagegen ist es gemäß des Ausführungsbeispiels möglich, wenn es zum Beispiel der Wunsch eines Bewohners ist, dass, nachdem er sein Haus verlassen hat, in dem Raum des Hauses, in dem die Glühlampe 202 angebracht ist, kein Licht brennt, dies durch die Übermittlung eines entsprechenden Fernsteuersignals an die fernsteuerbare Steuereinheit 130 zu veranlassen bzw. sicherzustellen. Dies gilt auch dann, wenn der Raum vom aktuellen Standort des Bewohners aus nicht einsehbar ist und er somit keine Information darüber hat, ob in dem Raum tatsächlich noch Licht brennt.

Durch die Möglichkeit, bei dem fernsteuerbaren Schalter 100 sowohl mittels der Strommessmittel 150 zu bestimmen, ob Strom über die Schaltanordnung 140 zwischen der ersten Anschlussgruppe und der zweiten Anschlussgruppe 120 fließt, als auch den Schaltzustand der Schaltanordnung 140 über die fernsteuerbare Steuereinheit 130 zu verändern, muss bei einer mehrere in Reihe geschaltete Schalter umfassenden Installation, wie der Beleuchtungsinstallation 200 aus Fig. 2 mit den Wechselschaltern 210 und 220, keine zusätzliche Leitung mit einer diesen Schaltern parallel geschalteten, fernsteuerbaren Schaltanordnung bereitgestellt werden. Diese wäre bei Unkenntnis des vorliegenden Schaltzustands aller Schalter oder bei nicht dem vom Benutzer per Fernsteuersignal geforderten Schaltzustand entsprechender Schaltzustandskombination notwendig, um die Reihenschaltung der Schalter 210 und 220 zu überbrücken und auf diese Weise dennoch das gewünschte Ergebnis zu erreichen. Dies verringert den Montageaufwand und erlaubt, die Herstellung der Fernbedienbarkeit durch den Austausch bloß eines konventionellen Bedienschalters, der üblicherweise leicht zugänglich ist, durch einen erfindungsgemäßen fernsteuerbaren Schalter - in diesem Beispiel durch den Austausch des Wechselschalters 210 aus Fig. 2 durch den fernsteuerbaren Schalter 100, wie in Fig. 3 gezeigt.

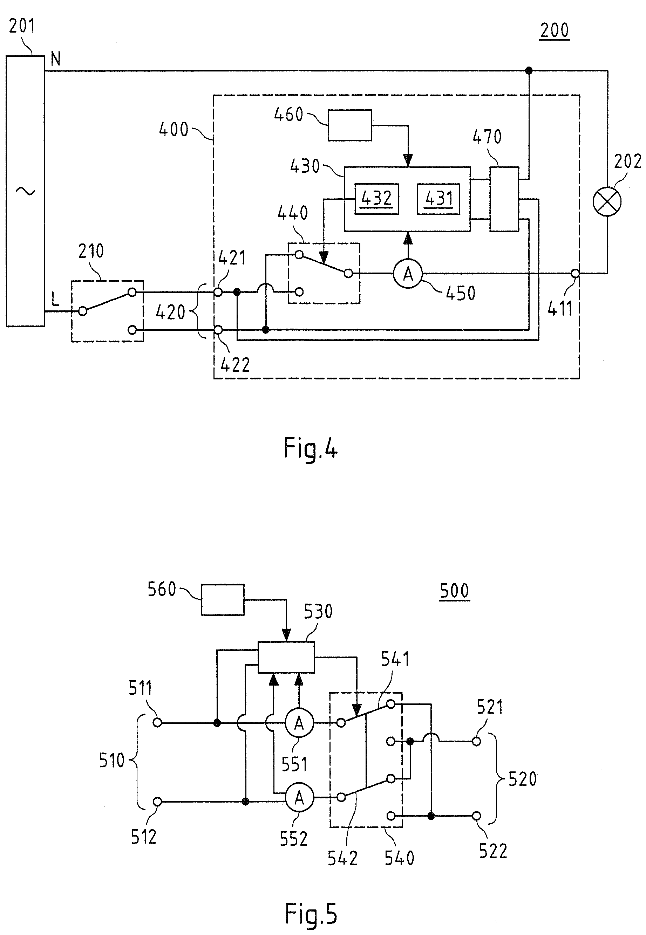

Fig. 4 zeigt die Beleuchtungsinstallation 200 aus Fig. 2, wobei der zweite Wechselschalter 220 der Wechselschaltung durch einen fernsteuerbaren Schalter 400 gemäß einem zweiten Beispiel ersetzt worden ist. Der Übersichtlichkeit halber wird bei der Erläuterung des fernsteuerbaren Schalters 400 vor allem auf die Unterschiede zum fernsteuerbaren Schalter 100 aus Fig. 1 eingegangen.
Der fernsteuerbare Schalter 400 umfasst, wie auch der fernsteuerbare Schalter 100 aus Fig. 1, eine erste Anschlussgruppe, die aus einem Anschluss 411 besteht, und einen zweite Anschlussgruppe 420, die einen ersten Anschluss 421 und einen zweiten Anschluss 422 umfasst. Zudem ist eine fernsteuerbare Steuereinheit 430, eine Schaltanordnung 440, Strommessmittel 450 und ein Netzteil 470 vorgesehen. Die fernsteuerbare Steuereinheit 430 umfasst ein ZigBee-Modul 431 und Signalerzeugungsmittel 432 in Form eines ASIC. Der fernsteuerbaren Steuereinheit sind ferner vorgesehene Betätigungsmittel 460 zugeordnet.
Das ZigBee-Modul 431 ist für den drahtlosen Empfang des Fernsteuersignals von einer zentralen Bedieneinrichtung (nicht gezeigt) eines Gebäudeautomationssystems, über die die zentralisierte Bedienung verschiedenster elektrischer Komponenten in einem Gebäude erfolgen kann, eingerichtet. Gleichzeitig vermag es Signale drahtlos an die Bedieneinrichtung des Gebäudeautomationssystems zu senden. Die Bedieneinrichtung weist Eingabemittel und Anzeigemittel auf. Ist die Einrichtung des Gebäudeautomationssystems mit Sensoren verbunden, können die von diesen Sensoren übermittelten Informationen bei der Erzeugung eines Fernsteuersignals berücksichtigt werden oder diese sogar erst veranlassen.

Über die Bedieneinrichtung des Gebäudeautomationssystems kann ein Benutzer angeben, ob er möchte, dass die Glühlampe 202 brennt oder nicht. Dieser Befehl wird als Fernsteuersignal an das ZigBee-Modul 431 der fernsteuerbaren Steuereinheit 430 übertragen. Über die Strommessmittel 450, die hier als Hall-Sensor ausgebildet sind, wird erfasst, ob im aktuellen Schaltzustand ein Strom über die Schaltanordnung 440 fließt und die gemessene Stromstärke wird als Ausgangssignal der Strommessmittel 450 an die fernsteuerbare Steuereinheit 430 übertragen. Das ZigBee-Modul 431 sendet das Ausgangssignal weiter an die Bedieneinrichtung des Gebäudeautomationssystems. Deren Anzeigemittel zeigen die aktuelle Leistungsaufnahme der Glühlampe 202 an. Weiterhin wird das Ausgangssignal der Strommessmittel 450 den Signalerzeugungsmitteln 432 der fernsteuerbaren Steuereinheit 430 zur Verfügung gestellt, die - falls notwendig - basierend auf dem Ausgangssignal und dem Fernsteuersignal ein Schaltsignal erzeugen und an die hier aus einem Relais bestehende Schaltanordnung 440 weiterleiten, damit nach einem Schaltvorgang die Glühlampe 202 aufleuchtet.

Die Betätigungsmittel 460 sind als Taster ausgestaltet und eingerichtet, bei Betätigung ein Betätigungssignal zum Schalten der Schaltanordnung 440 zu erzeugen und der fernsteuerbaren Steuereinheit 430 zur Verfügung zu stellen. Diese ist eingerichtet, ein auf dem Betätigungssignal der Betätigungsmittel 460 basierendes Schaltsignal zum Schalten der Schaltanordnung 440 zu erzeugen. Durch das Bereitstellen der Betätigungsmittel 460 bleibt die konventionelle Schaltbarkeit der Schaltanordnung 440 erhalten, so dass Benutzer nicht zu einer Umstellung ihrer Bediengewohnheiten gezwungen werden, während gleichzeitig das ferngesteuerte Auslösen eines Schaltvorgangs ermöglicht wird.

Die fernsteuerbare Steuereinheit 430 ist eingerichtet, aufgrund des Betätigungssignals einen Energiesparzustand zu verlassen. Dabei nimmt die fernsteuerbare Steuereinheit 430 den Energiesparzustand ein, wenn sie für eine bestimmte Zeitspanne kein Fernsteuersignal empfängt. Im Energiesparzustand ist das ZigBee-Modul 431 abgeschaltet. Nach Eingang eines Betätigungssignals der Betätigungsmittel 460 bei der fernsteuerbaren Steuereinheit 430 wird das ZigBee-Modul 431 wieder eingeschaltet.

Alternativ können Betätigungsmittel zum Herstellen einer unmittelbaren Schaltbarkeit der Schaltanordnung 440 mittels des Betätigungssignals auch direkt der Schaltanordnung 440 zugeordnet werden. Dies kann erlauben, dass ein manuelles Auslösen eines Umschaltvorgangs der Schaltanordnung 440 auch dann noch möglich ist, wenn die fernsteuerbare Steuereinheit 430 ausgefallen ist.

In Fig. 4 ist der fernsteuerbare Schalter 400 vom Netzanschluss 201 aus gesehen der zweite Schalter und hinter dem Wechselschalter 210 angeordnet. Die Anschlüsse 421 und 422 der zweiten Anschlussgruppe 420 dienen als Eingang und der Anschluss 411 der ersten Anschlussgruppe dient als Ausgang. Insofern ist das Szenario aus Fig. 4 im Vergleich zu dem aus Fig. 3 genau umgekehrt. Abhängig vom Schaltzustand des Wechselschalters 210 liegt entweder der erste Anschluss 421, wie in Fig. 4 gezeigt, oder der zweite Anschluss 422 der zweiten Anschlussgruppe auf dem Potential des Außenleiters L. Gemäß dem hier diskutierten Ausführungsbeispiel sind der erste Anschluss 421 der zweiten Anschlussgruppe 420 und der zweite Anschluss 422 der zweiten Anschlussgruppe 420 jeweils über das Netzteil 470 elektrisch mit der fernsteuerbaren Steuereinheit 430 des fernsteuerbaren Schalters 400 verbunden. Ungeachtet des Schaltzustands des Wechselschalters 210 liegt das Potential des Außenleiters L daher stets an der fernsteuerbaren Steuereinheit 430 an. Die vom Netzanschluss 201 zur Verfügung gestellte Spannung dient somit zur Spannungsversorgung der fernsteuerbaren Steuereinheit 430. Energiequellen zur Spannungsversorgung der fernsteuerbaren Steuereinheit 430 wie z.B. eine Batterie sind unnötig. Das Netzteil 470 enthält Überbrückungsmittel, die während des Umschaltvorgangs des Wechselschalters 210 die Spannungsversorgung der fernsteuerbaren Steuereinheit 430 sicherstellen.
Fig. 5 zeigt eine schematische Darstellung eines fernsteuerbaren Schalters 500 gemäß einem dritten Beispiel.

Der fernsteuerbare Schalter 500 umfasst eine fernsteuerbare Steuereinheit 530, deren Aufbau dem der fernsteuerbaren Steuereinheit 430 in Fig. 4 entspricht. Aus Gründen der Übersichtlichkeit ist das Netzteil nicht gezeigt. Weiterhin sind Betätigungsmittel 560 vorgesehen, die den Betätigungsmitteln 460 aus Fig. 4 entsprechen.

Die erste Anschlussgruppe 510 umfasst in diesem Ausführungsbeispiel einen ersten Anschluss 511 und einen zweiten Anschluss 512, die zweite Anschlussgruppe 520 einen ersten Anschluss 521 und einen zweiten Anschluss 522.

Die Schaltanordnung 540 besteht aus ersten Schaltmitteln 541 und zweiten Schaltmitteln 542. Beide Schaltmittel sind als jeweils ein Relais ausgebildet und jeweils zwischen zwei Schaltzuständen schaltbar. Das Umschalten der ersten Schaltmittel 541 und das Umschalten der zweiten Schaltmittel 542 erfolgt dabei stets gleichzeitig, wie durch die eingezeichnete Verbindung zwischen den Schaltmitteln 541 und 542 zum Ausdruck kommt.

Im ersten Schaltzustand der Schaltanordnung 540 ist der erste Anschluss 511 der ersten Anschlussgruppe 510 über die Schaltanordnung 540 elektrisch mit dem ersten Anschluss 521 der zweiten Anschlussgruppe 520 verbunden und der zweite Anschluss 512 der ersten Anschlussgruppe 510 ist über die Schaltanordnung 540 elektrisch mit dem zweiten Anschluss 522 der zweiten Anschlussgruppe 520 verbunden.

Im in Fig. 5 gezeigten zweiten Schaltzustand der Schaltanordnung 540 ist der erste Anschluss 511 der ersten Anschlussgruppe 510 über die Schaltanordnung 540 elektrisch mit dem zweiten Anschluss 522 der zweiten Anschlussgruppe 520 verbunden und der zweite Anschluss 512 der ersten Anschlussgruppe 510 ist über die Schaltanordnung 540 elektrisch mit dem ersten Anschluss 521 der zweiten Anschlussgruppe 520 verbunden.

Im Strompfad des ersten Anschlusses 511 der ersten Anschlussgruppe 510, der Schaltanordnung 540 und der zweiten Anschlussgruppe 520 sind erste Strommessmittel 551 zum Erzeugen eines den gemessenen Strom repräsentierenden ersten Ausgangssignals angeordnet. Ebenso sind im Strompfad des zweiten Anschlusses 512 der ersten Anschlussgruppe 510, der Schaltanordnung 540 und der zweiten Anschlussgruppe 520 angeordnete zweite Strommessmittel 552 zum Erzeugen eines den gemessenen Strom repräsentierenden zweiten Ausgangssignals angeordnet.

Die fernsteuerbare Steuereinheit 530 ist eingerichtet, das Schaltsignal zum Schalten der Schaltanordnung 540 zwischen dem ersten Schaltzustand und dem zweiten Schaltzustand basierend auf dem ersten Ausgangssignal der ersten Strommessmittel 551, dem zweiten Ausgangssignal der zweiten Strommessmittel 552 und dem Fernsteuersignal zu erzeugen.

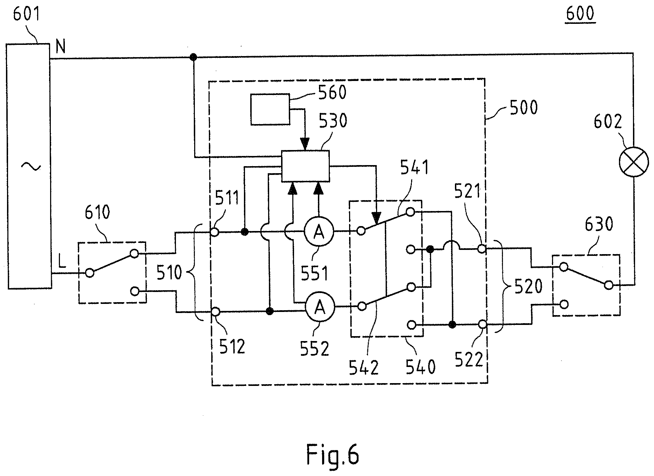

Fig. 6 zeigt eine schematische Darstellung einer eine Kreuzschaltung umfassenden Beleuchtungsinstallation 600 mit dem fernsteuerbaren Schalter 500 aus Fig. 5.

Die Beleuchtungsinstallation 600 umfasst einen Netzanschluss 601 und eine Glühlampe 602. Sie ähnelt der Beleuchtungsinstallation 200 aus Fig. 2. Die Glühlampe ist aber über drei Schalter 610, 500 und 630 mit dem Außenleiter L des Netzanschlusses 601 verbindbar. Bei den Schaltern 610 und 630 handelt es sich dabei um konventionelle Wechselschalter.

Die Anschlüsse 511 und 512 der ersten Anschlussgruppe 510 dienen als Eingänge des fernsteuerbaren Schalters 500, während die Anschlüsse 521 und 522 der zweiten Anschlussgruppe 520 als Ausgänge verwendet werden. Wegen der Symmetrie des fernsteuerbaren Schalters 500 ist jedoch ebenso die umgekehrte Nutzung der Anschlüsse der ersten und der zweiten Anschlussgruppe möglich.

Abhängig vom Schaltzustand des Wechselschalters 610, kann das Potential des Außenleiters L entweder am ersten Anschluss 511 der ersten Anschlussgruppe 510 oder am zweiten Anschluss 512 der ersten Anschlussgruppe 510 anliegen. Abhängig vom Schaltzustand des Wechselschalters 630, kann das Potential des Außenleiters L entweder über den ersten Anschluss 521 der zweiten Anschlussgruppe 520 oder über den zweiten Anschluss 522 der zweiten Anschlussgruppe 520 an der Glühlampe 602 anliegen. Da die ersten Strommessmittel 551 im Strompfad des ersten Anschlusses 511 der ersten Anschlussgruppe 510, der Schaltanordnung 540 und der zweiten Anschlussgruppe 520 angeordnet sind und die zweiten Strommessmittel 552 im Strompfad des zweiten Anschlusses 512 der ersten Anschlussgruppe 510, der Schaltanordnung 540 und der zweiten Anschlussgruppe 520 angeordnet sind, kann ein Schaltzustandswechsel der Schaltanordnung 540 als Änderung des gemessenen Stroms stets an den ersten Strommessmitteln 551 oder an den zweiten Strommessmitteln 552 erkennbar sein. Damit kann die fernsteuerbare Steuereinheit 530 unabhängig von den Schaltzuständen der Schalter 610, 500 und 630 feststellen, ob der mittels des Fernsteuersignals angeforderte Schaltzustand bereits vorliegt, oder ob ein Schaltvorgang der Schaltanordnung 540 erfolgen muss, damit dieser sich einstellt. Weil die fernsteuerbare Steuereinheit 530 eingerichtet ist, das Schaltsignal basierend auf dem ersten Ausgangssignal der ersten Strommessmittel 551, dem zweiten Ausgangssignal der zweiten Strommessmittel 552 und dem Fernsteuersignal zu erzeugen, kann sie dann mittels des Schaltsignals entweder einen Schaltvorgang einleiten oder den bisherigen Schaltzustand beibehalten. Im Ausführungsbeispiel aus Fig. 6 wird also über den fernsteuerbaren Schalter 500 die Fernsteuerbarkeit einer Beleuchtungsinstallation mit Kreuzschaltung hergestellt.

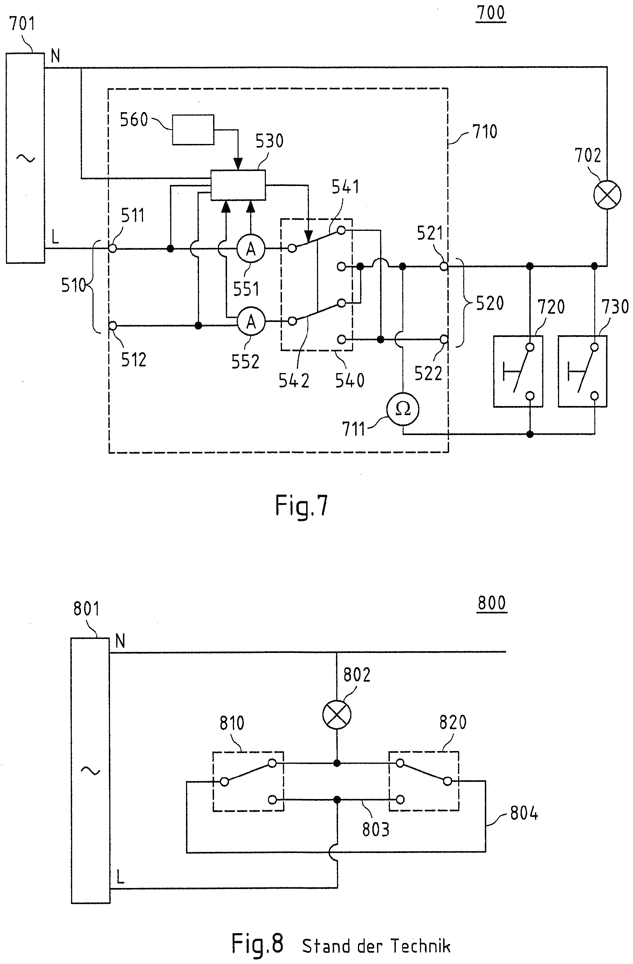

Fig. 7 zeigt eine schematische Darstellung einer eine Tasterschaltung umfassenden Beleuchtungsinstallation 700 mit einem fernsteuerbaren Schalter 710 gemäß einem Ausführungsbeispiel. Weiterhin umfasst die Installation 700 zwei Taster 720 und 730. Auch in diesem Beispiel sind ein Netzanschluss 701 und eine Glühlampe 702 Bestandteil der Beleuchtungsinstallation 700. Der fernsteuerbare Schalter 710 ist dabei ähnlich dem fernsteuerbaren Schalter 500 aus Fig. 5 aufgebaut. Für identische Komponenten werden daher dieselben Bezugszeichen verwendet.
Vom Schaltzustand der Schaltanordnung 540 hängt ab, ob der Außenleiter L des Netzanschlusses mit der Glühlampe 702 verbunden ist. Der zweite Anschluss 512 der ersten Anschlussgruppe 510 und der zweite Anschluss 522 der zweiten Anschlussgruppe 520 des fernsteuerbaren Schalters 710 bleiben in diesem Ausführungsbeispiel ungenutzt.

Der fernsteuerbaren Steuereinheit 530 sind Widerstandsmessmittel 711 als Tasterkennungsmittel zur Erkennung der Betätigung der externen Taster 720 und 730 zugeordnet. Bei der Betätigung schließen die Taster 720 und 730 einen Stromkreis, in den die Widerstandsmessmittel 711 eingeschleift sind. Die Widerstandsmessmittel 711 sind eingerichtet, der fernsteuerbaren Steuereinheit 530 ein den von ihnen gemessenen Widerstand repräsentierendes Tasterkennungssignal zur Verfügung zu stellen. Die fernsteuerbare Steuereinheit 530 ist eingerichtet, ein auf einem Tasterkennungssignal der Widerstandsmessmittel 711 basierendes Schaltsignal zum Schalten der Schaltanordnung 540 zu erzeugen. Die Widerstandsmessmittel 711 umfassen einen Referenzspannungsgeber, der eine Referenzspannung für die Widerstandsmessung erzeugt. Dieser wird über die Spannungsversorgung der fernsteuerbaren Steuereinheit 530 mit Spannung versorgt. Die Verbindungen der Widerstandsmessmittel 711 zur fernsteuerbaren Steuereinheit 530 sind aus Gründen der Übersichtlichkeit in Fig. 7 nicht dargestellt.

Die Tasterkennung erfolgt über einen eigenen Stromkreis, in den die Strommessmittel 551 und 552 nicht eingebunden sind. Durch die Verbindung zum ersten Anschluss 521 der zweiten Anschlussgruppe 520, liegt der Stromkreis entsprechend auf dem Potential dieses Anschlusses, dem ggf. die Referenzspannung überlagert ist.

Der Schalter 710 kann in eine Tasterschaltung, eine Ausschaltung, eine Wechsel- oder gar eine Kreuzschaltung integriert werden, so dass für alle diese Schaltungsarten nur ein Typ eines fernsteuerbaren Schalters vorgehalten werden muss. Für die Umrüstung einer Kreuzschaltung zur Herstellung der Fernsteuerbarkeit können beispielsweise ein Wechselschalter durch den Schalter 710 ersetzt werden, während der Kreuzschalter und der zweite Wechselschalter durch Taster ersetzt werden. Dazu müssen keine neuen Kabel verlegt werden, wenn, wie in Fig. 7 gezeigt, der vom Anschluss 521 abgehende Leiter nicht nur verwendet wird, um den Außenleiter L zu schalten, sondern auch als Bestandteil des Tasterstromkreises dient.

Fig. 8 zeigt eine schematische Darstellung einer eine Sparwechselschaltung umfassenden Beleuchtungsinstallation 800 gemäß dem Stand der Technik;

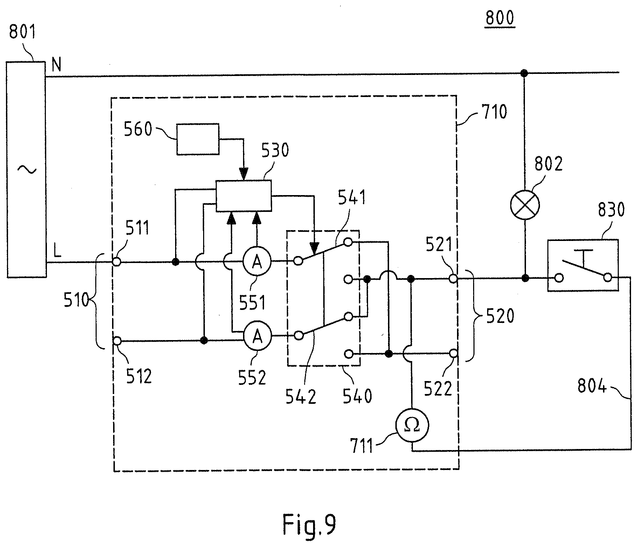

Fig. 9 zeigt die Beleuchtungsinstallation 800 aus Fig. 8, wobei der Wechselschalter 810 der Sparwechselschaltung durch den fernsteuerbaren Schalter 710 aus Fig. 7 ersetzt worden ist und der Wechselschalter 820 durch einen Taster 830 ersetzt worden ist. Der Leiter 804, der gemäß Fig. 8 dazu verwendet wurde, Anschlüsse der Wechselschalter 810 und 820 miteinander zu verbinden, wird in Fig. 9 als Bestandteil des Tasterstromkreises genutzt. Der Leiter 803 wird in Fig. 9 nicht verwendet. Er kann aber benutzt werden, um eine Verbindung des ersten Anschlusses 511 der ersten Anschlussgruppe 510 mit dem Außenleiter L des Netzanschlusses 801 herzustellen, wenn ein anderer Verbindungsweg zum Netzanschluss 801 komplizierter zu realisieren wäre. Es wird deutlich, dass für die Umrüstung der Beleuchtungsinstallation 800 nicht notwendigerweise neue Leitungen verlegt werden müssen.

## Patentansprüche

1. Fernsteuerbarer Schalter (100; 400; 500; 710) umfassend:
- eine erste Anschlussgruppe (111; 411; 510) und eine zweite Anschlussgruppe (120; 420; 520);
- eine fernsteuerbare Steuereinheit (130; 430; 530) zum Erzeugen eines Schaltsignals;
- eine Schaltanordnung (140; 440; 540), die mittels des Schaltsignals zwischen einem ersten Schaltzustand und einem zweiten Schaltzustand schaltbar ist;
- die erste Anschlussgruppe (111; 411; 510) zumindest einen Anschluss (111; 411; 511, 512) umfasst, die zweite Anschlussgruppe (120; 420; 520) einen ersten Anschluss (121; 421; 521)umfasst, der im ersten Schaltzustand der Schaltanordnung (140; 440; 540) elektrisch mit dem Anschluss (111; 411; 511, 512) der ersten Anschlussgruppe (510) verbunden ist, und die zweite Anschlussgruppe (120; 420; 520) einen zweiten Anschluss (122; 422; 522) umfasst, der im zweiten Schaltzustand der Schaltanordnung (140; 440; 540) elektrisch mit dem Anschluss (111; 411; 511, 512) der ersten Anschlussgruppe (111; 411; 510) verbunden ist;
- im Strompfad des Anschlusses (111; 411; 511, 512) der ersten Anschlussgruppe (111; 411; 510), der Schaltanordnung (140; 440; 540) und der zweiten Anschlussgruppe (120; 420; 520) angeordnete Strommessmittel (150; 450; 551, 552) zum Erzeugen eines den gemessenen Strom repräsentierenden Ausgangssignals vorgesehen sind;
- die fernsteuerbare Steuereinheit (130; 430; 530) eingerichtet ist, das Schaltsignal basierend auf dem Ausgangssignal der Strommessmittel (150; 450; 551, 552) und einem Fernsteuersignal zu erzeugen,
**dadurch gekennzeichnet, dass**
- der fernsteuerbaren Steuereinheit (530) Tasterkennungsmittel (711) zur Erkennung der Betätigung externer Tastmittel (720, 730, 830) zugeordnet sind und die fernsteuerbare Steuereinheit (530) eingerichtet ist, ein auf dem Tasterkennungssignal der Tasterkennungsmittel (711) basierendes Schaltsignal zum Schalten der Schaltanordnung (540) zu erzeugen, und
- die externen Tastmittel (720, 730, 830) bei Betätigung einen Stromkreis schließen oder einen geschlossenen Stromkreis unterbrechen, wobei die Tasterkennungsmittel (711) in den Stromkreis eingeschleift sind, als Widerstandsmessmittel ausgebildet sind und eingerichtet sind, der fernsteuerbaren Steuereinheit (530) ein den von ihnen gemessenen Widerstand repräsentierendes Tasterkennungssignal zur Verfügung zu stellen.

2. Fernsteuerbarer Schalter (400; 500; 710) gemäß Anspruch 1, **dadurch gekennzeichnet, dass** der fernsteuerbare Schalter (400; 500; 710) Betätigungsmittel (460; 560), insbesondere Tastmittel, zum Erzeugen eines Betätigungssignals zum Schalten der Schaltanordnung (440; 540) umfasst.

3. Fernsteuerbarer Schalter (400; 500; 710) gemäß Anspruch 2, **dadurch gekennzeichnet, dass** die Betätigungsmittel (460; 560) der fernsteuerbaren Steuereinheit (430; 530) zugeordnet sind, und die fernsteuerbare Steuereinheit (430; 530) eingerichtet ist, ein auf dem Betätigungssignal der Betätigungsmittel (460; 560) basierendes Schaltsignal zum Schalten der Schaltanordnung (440; 540) zu erzeugen.

4. Fernsteuerbarer Schalter (400; 500; 710) gemäß Anspruch 3, **dadurch gekennzeichnet, dass** die fernsteuerbare Steuereinheit (430; 530) eingerichtet ist, aufgrund des Betätigungssignals einen Energiesparzustand zu verlassen.

5. Fernsteuerbarer Schalter gemäß Anspruch 2, **dadurch gekennzeichnet, dass** die Betätigungsmittel der Schaltanordnung zugeordnet sind, wobei die Schaltanordnung unmittelbar mittels des Betätigungssignals der Betätigungsmittel zwischen dem ersten Schaltzustand und dem zweiten Schaltzustand schaltbar ist.

6. Fernsteuerbarer Schalter (400; 500; 710) gemäß einem der Ansprüche 1-5, **dadurch gekennzeichnet, dass** die fernsteuerbare Steuereinheit (430; 530) eingerichtet ist, das Fernsteuersignal drahtlos zu empfangen.

7. Fernsteuerbarer Schalter (400; 500; 710) gemäß einem der Ansprüche 1-6, **dadurch gekennzeichnet, dass** die fernsteuerbare Steuereinheit (430; 530) eingerichtet ist, das Fernsteuersignal von einer Einrichtung eines Gebäudeautomationssystems (701) zu empfangen.

8. Fernsteuerbarer Schalter (400; 500; 710) gemäß Anspruch 7, **dadurch gekennzeichnet, dass** die fernsteuerbare Steuereinheit (430; 530) eingerichtet ist, Signale an die Einrichtung des Gebäudeautomationssystems zu senden.

9. Fernsteuerbarer Schalter (400; 500; 710) gemäß Anspruch 8, **dadurch gekennzeichnet, dass** die fernsteuerbare Steuereinheit (430; 530) eingerichtet ist, die Signale drahtlos an die Einrichtung des Gebäudeautomationssystems zu senden.

10. Fernsteuerbarer Schalter (400; 500; 710) gemäß einem der Ansprüche 1-9, **dadurch gekennzeichnet, dass** der fernsteuerbare Schalter (400; 500; 710) zur Spannungsversorgung eines Verbrauchers (202; 602; 702; 802) mit Spannungsversorgungsmitteln (201; 601; 701; 801) verbunden ist und die von den Spannungsversorgungsmitteln (201; 601; 701; 801) zur Verfügung gestellte Spannung zur Spannungsversorgung der fernsteuerbaren Steuereinheit (430; 530) dient.

11. Fernsteuerbarer Schalter (400; 500; 710) gemäß Anspruch 10, **dadurch gekennzeichnet, dass** der erste Anschluss (421; 521) der zweiten Anschlussgruppe (420; 520) und der zweite Anschluss (422; 522) der zweiten Anschlussgruppe (420; 520) jeweils elektrisch mit der fernsteuerbaren Steuereinheit (430; 530) verbunden sind.

12. Fernsteuerbarer Schalter (500; 710) gemäß einem der Ansprüche 1-11, **dadurch gekennzeichnet, dass**
- die erste Anschlussgruppe (510) einen ersten Anschluss (511) und einen zweiten Anschluss (512) umfasst;
- im ersten Schaltzustand der Schaltanordnung (540) der erste Anschluss (511) der ersten Anschlussgruppe (510) über die Schaltanordnung (540) elektrisch mit dem ersten Anschluss (521) der zweiten Anschlussgruppe (520) verbunden ist und der zweite Anschluss (512) der ersten Anschlussgruppe (510) über die Schaltanordnung (540) elektrisch mit dem zweiten Anschluss (522) der zweiten Anschlussgruppe (522) verbunden ist;
- im zweiten Schaltzustand der Schaltanordnung (540) der erste Anschluss (511) der ersten Anschlussgruppe (510) über die Schaltanordnung (540) elektrisch mit dem zweiten Anschluss (522) der zweiten Anschlussgruppe (520) verbunden ist und der zweite Anschluss (512) der ersten Anschlussgruppe (510) über die Schaltanordnung (540) elektrisch mit dem ersten Anschluss (521) der zweiten Anschlussgruppe (520) verbunden ist;
- im Strompfad des ersten Anschlusses (511) der ersten Anschlussgruppe (510), der Schaltanordnung (540) und der zweiten Anschlussgruppe (520) angeordnete erste Strommessmittel (551) zum Erzeugen eines den gemessenen Strom repräsentierenden ersten Ausgangssignals vorgesehen sind;
- im Strompfad des zweiten Anschlusses (512) der ersten Anschlussgruppe (510), der Schaltanordnung (540) und der zweiten Anschlussgruppe (520) angeordnete zweite Strommessmittel (552) zum Erzeugen eines den gemessenen Strom repräsentierenden zweiten Ausgangssignals vorgesehen sind;
- die fernsteuerbare Steuereinheit (530) eingerichtet ist, das Schaltsignal basierend auf dem ersten Ausgangssignal der ersten Strommessmittel (551), dem zweiten Ausgangssignal der zweiten Strommessmittel (552) und dem Fernsteuersignal zu erzeugen.

13. Fernsteuerbarer Schalter gemäß einem der Ansprüche 4 bis 12, **dadurch gekennzeichnet, dass** eine bestimmte Betätigungssignalfolge bei der fernsteuerbaren Steuereinheit (430; 530) eingehen muss, damit diese den Energiesparzustand verlässt.

14. System umfassend:
- eine Einrichtung eines Gebäudeautomationssystems zum Erzeugen eines Fernsteuersignals;
- einen fernsteuerbaren Schalter nach einem der Ansprüche 6-13;
- einen elektrischen Verbraucher, der über den fernsteuerbaren Schalter entweder im ersten oder im zweiten Schaltzustand der Schaltanordnung des fernsteuerbaren Schalters mit Spannungsversorgungsmitteln verbunden ist.

## Claims

1. A remotely controllable switch (100; 400; 500; 710), comprising:
- a first terminal group (111; 411; 510) and a second terminal group (120; 420; 520);
- a remotely controllable control unit (130; 430; 530) for generating a switching signal;
- a switching arrangement (140; 440; 540) which is switchable by means of the switching signal between a first switching state and a second switching state;
- the first terminal group (111; 411; 510) comprises at least one terminal (111; 411; 511, 512), the second terminal group (120; 420; 520) comprises a first terminal (121; 421; 521), which is electrically connected to the terminal (111; 411; 511, 512) of the first terminal group (510) in the first switching state of the switching arrangement (140; 440; 540), and the second terminal group (120; 420; 520) comprises a second terminal (122; 422) 522) which is electrically connected to the terminal (111; 411; 511, 512) of the first terminal group (111; 411; 510) in the second switching state of the switching arrangement (140; 440; 540);
- in the current path of the terminal (111; 411; 511, 512) of the first terminal group (111; 411; 510), the switching arrangement (140; 440; 540) and the second terminal group (120; 420; 520) arranged current measuring means (150; 450, 551, 552) are provided for generating an output signal representative of the measured current;
- the remotely controllable control unit (130; 430; 530) is configured to generate the switching signal based on the output signal of the current measuring means (150; 450; 551, 552) and a remote control signal,
**characterized in that**
- sensing detection means (711) for detecting the actuation of external sensing means (720, 730, 830) are assigned to the remotely controllable control unit (530) and the remotely controllable control unit (530) is configured, based on the sensing detection signal of the sensing detection means (711), to generate a switching signal for switching the switching arrangement (540), and
- the external sensing means (720, 730, 830) in case of an actuation close a circuit or interrupt a closed circuit, wherein the sensing detection means (711) are looped into the circuit, are formed as resistance measuring means and are configured to provide to the remotely controllable control unit (530) a sensing detection signal representing a resistance measured by the sensing detection means (711).

2. A remotely controllable switch (400; 500; 710) according to claim 1, **characterized in that** the remotely controllable switch (400; 500; 710) comprises actuating means (460; 560), in particular sensing means, for generating an actuation signal for switching the switching arrangement (440; 540).

3. A remotely controllable switch (400; 500; 710) according to claim 2, **characterized in that** the actuating means (460; 560) are assigned to the remotely controllable control unit (430; 530) and the remotely controllable control unit (430; 530) is configured to generate a switching signal based on the actuating signal of the actuating means (460; 560) for switching the switching arrangement (440; 540).

4. A remotely controllable switch (400; 500; 710) according to claim 3, **characterized in that** the remotely controllable control unit (430; 530) is configured to leave a power saving state due to the actuating signal.

5. A remote controllable switch according to claim 2, **characterized in that** the actuating means are assigned to the switching arrangement, wherein the switching arrangement is switched directly by means of the actuating signal of the actuating means between the first switching state and the second switching state.

6. A remotely controllable switch (400; 500; 710) according to any one of claims 1 to 5, **characterized in that** the remotely controllable control unit (430; 530) is configured to receive the remote control signal wirelessly.

7. A remotely controllable switch (400; 500; 710) according to any one of claims 1 to 6, **characterized in that** the remotely controllable control unit (430; 530) is configured to receive the remote control signal from a device of a building automation system (701).

8. A remotely controllable switch (400; 500; 710) according to claim 7, **characterized in that** the remotely controllable control unit (430; 530) is configured to send signals to the device of the building automation system.

9. A remotely controllable switch (400; 500; 710) according to claim 8, **characterized in that** the remotely controllable control unit (430; 530) is configured to wirelessly send the signals to the device of the building automation system.

10. A remotely controllable switch (400; 500; 710) according to any one of claims 1 to 9, **characterized in that** the remotely controllable switch (400; 500; 710) is connected with power supply means (201 ; 601; 701; 801) for supplying power to a load (202; 602; 702; 802), and the voltage provided by the power supply means (201; 601; 701; 801) is for supplying power to the remotely controllable control unit (430; 530).

11. The remotely controllable switch (400; 500; 710) according to claim 10, **characterized in that** the first terminal (421; 521) of the second terminal group (420; 520) and the second terminal (422; 522) of the second terminal group (420; 520) are each electrically connected to the remotely controllable control unit (430; 530).

12. A remote controllable switch (500; 710) according to any one of claims 1 to 11, **characterized in that**
- the first terminal group (510) comprises a first terminal (511) and a second terminal (512);
- in the first switching state of the switching arrangement (540), the first terminal (511) of the first terminal group (510) is electrically connected to the first terminal (521) of the second terminal group (520) via the switching arrangement (540) and the second terminal (512) of the first terminal group (510) is electrically connected to the second terminal (522) of the second terminal group (522) via the switching arrangement (540);
- in the second switching state of the switching arrangement (540), the first terminal (511) of the first terminal group (510) is electrically connected to the second terminal (522) of the second terminal group (520) via the switching arrangement (540) and the second terminal (512) of the first terminal group (510) is electrically connected to the first terminal (521) of the second terminal group (520) via the switching arrangement (540);
- in the current path of the first terminal (511) of the first terminal group (510), the switching arrangement (540) and the second terminal group (520) arranged first current measuring means (551) are provided for generating a measured current representing the first output signal;
- in the current path of the second terminal (512) of the first terminal group (510), the switching arrangement (540) and the second terminal group (520) arranged second current measuring means (552) are provided for generating a measured current representing the second output signal;
- the remotely controllable control unit (530) is configured to generate the switching signal based on the first output signal of the first current measuring means (551), the second output signal of the second current measuring means (552) and the remote control signal.

13. A remote controllable switch according to any one of claims 4 to 12, **characterized in that** a certain actuation signal sequence must be received by the remotely controllable control unit (430; 530) to leave the energy-saving state.

14. System comprising:
- a device of a building automation system for generating a remote control signal;
- a remotely controllable switch according to any one of claims 6 to 13;
- an electrical consumer, which is connected via the remote controllable switch either in the first or in the second switching state of the switching arrangement of the remotely controllable switch with power supply means.

## Revendications

1. Interrupteur (100 ; 400 ; 500 ; 710) pouvant être commandé à distance et comprenant :
- un premier groupe de raccordement (111 ; 411 ; 510) et un deuxième groupe de raccordement (120 ; 420 ; 520) ;
- une unité de commande (130 ; 430 ; 530) pouvant être commandée à distance et servant à la production d'un signal de commutation ;
- un agencement de couplage (140 ; 440 ; 540) qui, au moyen du signal de commutation, peut être commuté entre un premier état de commutation et un deuxième état de commutation ;
- le premier groupe de raccordement (111 ; 411 ; 510) comprend au moins une connexion (111 ; 411 ; 511, 512), le deuxième groupe de raccordement (120 ; 420 ; 520) comprend une première connexion (121 ; 421 ; 521) qui, dans le premier état de commutation de l'agencement de couplage (140; 440 ; 540), est reliée électriquement à la connexion (111 ; 411 ; 511, 512) du premier groupe de raccordement (510), et le deuxième groupe de raccordement (120 ; 420 ; 520) comprend une deuxième connexion (122 ; 422 ; 522) qui, dans le deuxième état de commutation de l'agencement de couplage (140 ; 440 ; 540), est reliée électriquement à la connexion (111 ; 411 ; 511, 512) du premier groupe de raccordement (111 ; 411 ; 510) ;
- il est prévu des moyens de mesure du courant (150; 450 ; 551, 552) servant à la production d'un signal de sortie représentant le courant mesuré, lesdits moyens de mesure du courant étant disposés dans le trajet de courant de la connexion (111; 411 ; 511, 512) du premier groupe de raccordement (111 ; 411 ; 510), dans le trajet de courant de l'agencement de couplage (140; 440 ; 540) et du deuxième groupe de raccordement (120 ; 420 ; 520) ;
- l'unité de commande (130 ; 430 ; 530) pouvant être commandée à distance est agencée pour produire le signal de commutation en se basant sur le signal de sortie des moyens de mesure du courant (150 ; 450 ; 551, 552) et sur un signal de commande à distance,
**caractérisé**
- **en ce que** des moyens d'identification (711) des boutons poussoirs servant à l'identification de l'actionnement de boutons poussoirs externes (720, 730, 830) sont associés à l'unité de commande (530) pouvant être commandée à distance, et l'unité de commande (530) pouvant être commandée à distance est agencée pour produire un signal de commutation en se basant sur le signal d'identification des boutons poussoirs concernant les moyens d'identification (711) des boutons poussoirs, ledit signal de commutation servant à la commutation de l'agencement de couplage (540), et
- **en ce que** les boutons poussoirs externes (720, 730, 830) ferment un circuit quand ils sont actionnés, ou bien coupent un circuit fermé, où les moyens d'identification (711) des boutons poussoirs sont insérés dans le circuit et sont conçus comme des moyens de mesure de la résistance et sont agencés pour fournir à l'unité de commande (530) pouvant être commandée à distance, un signal d'identification des boutons poussoirs, ledit signal représentant la résistance mesurée par lesdits moyens d'identification.

2. Interrupteur (400 ; 500 ; 710) pouvant être commandé à distance selon la revendication 1, **caractérisé en ce que** l'interrupteur (400 ; 500 ; 710) pouvant être commandé à distance comprend des moyens d'actionnement (460 ; 560), en particulier des boutons poussoirs, servant à la production d'un signal d'actionnement servant à la commutation de l'agencement de couplage (440 ; 540).

3. Interrupteur (400 ; 500 ; 710) pouvant être commandé à distance selon la revendication 2, **caractérisé en ce que** les moyens d'actionnement (460 ; 560) sont associés à l'unité de commande (430 ; 530) pouvant être commandée à distance, et l'unité de commande (430 ; 530) pouvant être commandée à distance est agencée pour produire un signal de commutation servant à la commutation de l'agencement de couplage (440 ; 540), ledit signal de commutation étant produit en se basant sur le signal d'actionnement des moyens d'actionnement (460 ; 560).

4. Interrupteur (400 ; 500 ; 710) pouvant être commandé à distance selon la revendication 3, **caractérisé en ce que** l'unité de commande (430 ; 530) pouvant être commandée à distance est agencée pour sortir, en raison du signal d'actionnement, d'un état d'économie d'énergie.

5. Interrupteur pouvant être commandé à distance selon la revendication 2, **caractérisé en ce que** les moyens d'actionnement sont associés à l'agencement de couplage, où l'agencement de couplage peut être commuté entre le premier état de commutation et le deuxième état de commutation, directement au moyen du signal d'actionnement des moyens d'actionnement.

6. Interrupteur (400 ; 500 ; 710) pouvant être commandé à distance selon l'une quelconque des revendications 1 à 5, **caractérisé en ce que** l'unité de commande (430 ; 530) pouvant être commandée à distance est agencée pour recevoir sans fil le signal de commande à distance.

7. Interrupteur (400 ; 500 ; 710) pouvant être commandé à distance selon l'une quelconque des revendications 1 à 6, **caractérisé en ce que** l'unité de commande (430 ; 530) pouvant être commandée à distance est agencée pour recevoir le signal de commande à distance provenant d'un dispositif d'un système d'automatisation (701) d'un bâtiment.

8. Interrupteur (400 ; 500 ; 710) pouvant être commandé à distance selon la revendication 7, **caractérisé en ce que** l'unité de commande (430 ; 530) pouvant être commandée à distance est agencée pour envoyer des signaux au dispositif du système d'automatisation du bâtiment.

9. Interrupteur (400 ; 500 ; 710) pouvant être commandé à distance selon la revendication 8, **caractérisé en ce que** l'unité de commande (430 ; 530) pouvant être commandée à distance est agencée pour envoyer sans fil les signaux au dispositif du système d'automatisation du bâtiment.

10. Interrupteur (400 ; 500 ; 710) pouvant être commandé à distance selon l'une quelconque des revendications 1 à 9, **caractérisé en ce que** l'interrupteur (400 ; 500 ; 710) pouvant être commandé à distance est relié, pour l'alimentation en tension d'un appareil consommateur de courant électrique (202 ; 602 ; 702 ; 802), à des moyens d'alimentation en tension (201 ; 601 ; 701; 801), et la tension fournie par les moyens d'alimentation en tension (201 ; 601 ; 701 ; 801) sert à l'alimentation en tension de l'unité de commande (430 ; 530) pouvant être commandée à distance.

11. Interrupteur (400 ; 500 ; 710) pouvant être commandé à distance selon la revendication 10, **caractérisé en ce que** la première connexion (421 ; 521) du deuxième groupe de raccordement (420 ; 520), et la deuxième connexion (422 ; 522) du deuxième groupe de raccordement (420 ; 520) sont à chaque fois reliées électriquement à l'unité de commande (430 ; 530) pouvant être commandée à distance.

12. Interrupteur (500 ; 710) pouvant être commandé à distance selon l'une quelconque des revendications 1 à 11,
**caractérisé**
- **en ce que** le premier groupe de raccordement (510) comprend une première connexion (511) et une deuxième connexion (512) ;
- **en ce que**, dans le premier état de commutation de l'agencement de couplage (540), la première connexion (511) du premier groupe de raccordement (510) est reliée électriquement, par l'agencement de couplage (540), à la première connexion (521) du deuxième groupe de raccordement (520), et la deuxième connexion (512) du premier groupe de raccordement (510) est reliée électriquement, par l'agencement de couplage (540), à la deuxième connexion (522) du deuxième groupe de raccordement (520) ;
- **en ce que**, dans le deuxième état de commutation de l'agencement de couplage (540), la première connexion (511) du premier groupe de raccordement (510) est reliée électriquement, par l'agencement de couplage (540), à la deuxième connexion (522) du deuxième groupe de raccordement (520), et la deuxième connexion (512) du premier groupe de raccordement (510) est reliée électriquement, par l'agencement de couplage (540), à la première connexion (521) du deuxième groupe de raccordement (520) ;
- **en ce qu'**il est prévu des premiers moyens de mesure du courant (551) disposés dans le trajet de courant de la première connexion (511) du premier groupe de raccordement (510), dans le trajet de courant de l'agencement de couplage (540) et du deuxième groupe de raccordement (520), lesdits premiers moyens de mesure du courant servant à la production d'un premier signal de sortie représentant le courant mesuré ;
- **en ce qu'**il est prévu des deuxièmes moyens de mesure du courant (552) disposés dans le trajet de courant de la deuxième connexion (512) du premier groupe de raccordement (510), dans le trajet de courant de l'agencement de couplage (540) et du deuxième groupe de raccordement (520), lesdits deuxièmes moyens de mesure du courant servant à la production d'un deuxième signal de sortie représentant le courant mesuré ;
- **en ce que** l'unité de commande (530) pouvant être commandée à distance est agencée pour produire le signal de commutation en se basant sur le premier signal de sortie des premiers moyens de mesure du courant (551), en se basant sur le deuxième signal de sortie des deuxièmes moyens de mesure du courant (552) et sur le signal de commande à distance,

13. Interrupteur pouvant être commandé à distance selon l'une quelconque des revendications 4 à 12, **caractérisé en ce qu'**une séquence définie de signaux d'actionnement doit se produire concernant l'unité de commande (430 ; 530) pouvant être commandée à distance, afin que ladite unité de commande sorte de l'état d'économie d'énergie.

14. Système comprenant :
- un dispositif d'un système d'automatisation d'un bâtiment, ledit dispositif servant à la production d'un signal de commande à distance ;
- un interrupteur pouvant être commandé à distance selon l'une quelconque des revendications 6 à 13 ;
- un appareil consommateur de courant électrique qui est relié, par l'interrupteur pouvant être commandé à distance, à des moyens d'alimentation en tension, la liaison étant réalisée soit au cours du premier ou du deuxième état de commutation de l'agencement de couplage de l'interrupteur pouvant être commandé à distance.
